# EUROPÄISCHE PATENTSCHRIFT

(11) **EP 4 077 524 B1**
(45) Veröffentlichungstag und Bekanntmachung des Hinweises auf die Patenterteilung: **05.02.2025**
(21) Anmeldenummer: 20817366.6
(22) Anmeldetag: 07.12.2020
(51) Int. Cl.: C08K 9/06, C08L 75/14

(54) **REAKTIVHARZKOMPONENTE, DIESE ENTHALTENDES REAKTIVHARZSYSTEM UND DEREN VERWENDUNG**
REACTIVE RESIN COMPONENT, REACTIVE RESIN SYSTEM CONTAINING THE SAME AND USE THEREOF
COMPOSANT DE RÉSINE RÉACTIVE, SYSTÈME DE RÉSINE RÉACTIVE COMPORTANT LEDIT COMPOSANT DE RÉSINE RÉACTIVE ET LEUR UTILISATION

(30) Priorität: 18.12.2019 EP 19217615
(43) Veröffentlichungstag der Anmeldung: 26.10.2022
(73) Patentinhaber: Hilti Aktiengesellschaft, 9494 Schaan (LI)
(72) Erfinder: GAEFKE, Gerald, 87600 Kaufbeuren (DE); KUMRU, Memet-Emin, 86199 Augsburg (DE); MARTIN-LASANTA, Ana-Maria, 86899 Landsberg am Lech (DE); OCTA-SMOLIN, Frescilia, 82386 Huglfing (DE); KISSEL, Jacqueline, 86899 Landsberg am Lech (DE)
(74) Vertreter: Hilti Aktiengesellschaft Corporate Intellectual Property
(86) Internationale Anmeldenummer: PCT/EP2020/084876
(87) Internationale Veröffentlichungsnummer: WO 2021/122102

(56) Entgegenhaltungen:
- EP-A1- 3 000 792

## Beschreibung

Die Erfindung betrifft eine Reaktivharzkomponente für ein Reaktivharz-System, ein diese enthaltendes Reaktivharz-System sowie die Verwendung der Reaktivharzkomponente für die chemische Befestigung.

### Hintergrund

Die Verwendung von chemischen Befestigungsmitteln auf Basis radikalisch härtbarer Harze ist seit langem bekannt. Im Bereich der Befestigungstechnik hat sich die Verwendung von Harzen als organisches Bindemittel für die chemische Befestigungstechnik, z.B. als Bestandteil einer Dübelmasse ("chemischer Dübel"), durchgesetzt. Es handelt sich bei solchen Dübelmassen um Verbundmassen, die als Mehrkomponenten-Systeme, üblicherweise Zweikomponenten-Systeme konfektioniert sind, wobei eine Komponente (die Reaktivharzkomponente) das radikalisch härtbare Harz und die andere Komponente (die Härterkomponente) einen Initiator (für die Radikalbildung) enthält. Andere, übliche Bestandteile, wie beispielsweise Additive, Füllstoffe, Beschleuniger, Inhibitoren, Lösungsmittel und Reaktivverdünner, können in der einen und/oder der anderen Komponente enthalten sein. Durch Vermischen der beiden Komponenten wird dann durch Radikalbildung die Härtungsreaktion, d.h. die Polymerisation, in Gang gebracht und das Harz zum Duromeren gehärtet.

Die Dübelmassen werden zur Befestigung von Verankerungsmitteln in Bohrlöchern verschiedenen Untergrunds und zum baulichen Kleben verwendet. Dabei sollen die Verankerungsmittel gegenüber axialem Zug möglichst hohen Widerstand, also hohe Auszugswerte bieten. Solch hohe Auszugswerte sind in der Anwendung von Vorteil, da höhere Lasten getragen werden können oder die Einbindetiefe verringert werden kann. Letzteres hat den Vorteil, da es für den Anwender eine Material- und Zeitersparnis darstellt.

Ein hoher Anteil an hochviskosen oder festen radikalisch härtbaren Verbindungen, das was auch häufig als Festharz bezeichnet wird, trägt dabei im Allgemeinen zu höheren Auszugswerten bei. Allerdings ist der Anteil an Festharz in zweierlei Hinsicht limitiert. Zum einen bringt ein höhere Anteil ab einer bestimmten Menge eher einen Nachteil dahingegen, dass der Schrumpf bei der Aushärtung zunimmt, und zum anderen führt ein hoher Festharzanteil auch unweigerlich zu einer hohen Viskosität der Komponenten. Eine ausreichend niedrige Viskosität ist allerdings notwendig, um einen hohen Anteil an festen Füllstoffen zu ermöglichen und damit einen möglichst geringen Schrumpf während der Härtung der Masse zu ermöglichen. Andererseits muss gewährleistet sein, dass die Masse ohne zu hohen Kraftaufwand ausgepresst und in das Bohrloch injiziert werden kann.

Aus der EP 3000792 A1 ist bekannt, dass durch die Verwendung von Füllstoffen mit sehr kleiner Partikelgröße, d.h. deren Mittelkorn d₅₀ bei 50 µm oder kleiner liegt, in Befestigungssystemen auf Basis von Reaktivkunstharzen gute Zug- und Druckfestigkeiten erreicht werden können.

Ein hoher Anteil an festen Füllstoffen geht jedoch in der Regel zu Lasten der Auspresskräfte.

Es besteht daher Bedarf, einen für radikalisch härtbare Systeme hohen Füllgrad einzustellen ohne die Viskosität des Systems negativ zu beeinträchtigen und die Leistungsfähigkeit des Systems zu erhöhen.

### Beschreibung der Erfindung

Diese Aufgabe wird durch die hier beschriebenen Reaktivharzkomponente mit hohem Füllgrad und einem gewissen Gehalt an silanisierten Füllstoffen und ein diese Reaktivharzkomponente enthaltende Reaktivharzsystem gelöst.

Ein erster Gegenstand der Erfindung ist eine Reaktivharzkomponente mit mindestens einer radikalisch härtbaren ungesättigten Verbindung und mindestens einem Füllstoff aus Oxiden von Silizium, der mit einem Silan, das zur Teilnahme an der Polymerisierung mit der radikalisch härtbaren ungesättigten Verbindung befähigte reaktive Gruppen aufweist, modifiziert ist, und mit gegebenenfalls weiteren anderen anorganischen Zusätzen, wobei der Anteil aller anorganischen Feststoffe in der Reaktivharzkomponente mindestens 60 Gew.-% beträgt und dass der Anteil an dem mindestens einen Füllstoff aus Oxiden von Silizium, der mit einem Silan, das zur Teilnahme an der Polymerisierung mit der radikalisch härtbaren, Verbindung befähigte reaktive Gruppen aufweist, modifiziert ist, der einen Korndurchmesser von 4 µm oder kleiner aufweist, 0,5 bis 60 Gew.-%, bevorzugt 1 bis 50 Gew.-%, besonders bevorzugt 2,75 bis 26 Gew.-% beträgt, bezogen auf die Reaktivharzkomponente dadurch gekennzeichnet, dass die radikalisch härtbare ungesättigte Verbindung
(i) 35 Gew.-% oder mehr, bezogen auf die Reaktivharzkomponente, einer Verbindung mit mindestens zwei Kohlenstoff-Kohlenstoff-Doppelbindungen, deren gewichtsmittleres Molekulargewicht pro Kohlenstoff-Kohlenstoff-Doppelbindung (WPU) größer 230 g/mol und deren Viskosität größer 2500 mPa·s (gemessen gemäß DIN 53019 bei 25°C) ist,
(ii) 30 Gew.-% oder mehr, bezogen auf die Reaktivharzkomponente, einer Verbindung mit mindestens zwei Kohlenstoff-Kohlenstoff-Doppelbindungen, deren gewichtsmittleres Molekulargewicht pro Kohlenstoff-Kohlenstoff-Doppelbindung (WPU) größer 230 g/mol und deren Viskosität größer 2500 mPa·s (gemessen gemäß DIN 53019 bei 25°C) ist, und
   10 Gew.-% oder mehr, bezogen auf die Reaktivharzkomponente, einer Verbindung mit mindestens zwei Kohlenstoff-Kohlenstoff-Doppelbindungen, deren gewichtsmittleres Molekulargewicht pro Kohlenstoff-Kohlenstoff-Doppelbindung (WPU) größer 125 g/mol und deren Viskosität kleiner 2500 mPa·s (gemessen gemäß DIN 53019 bei 25°C) ist;
   oder
(iii) 57 Gew.-% oder mehr, bezogen auf die Reaktivharzkomponente, einer Verbindung mit mindestens zwei Kohlenstoff-Kohlenstoff-Doppelbindungen, deren gewichtsmittleres Molekulargewicht pro Kohlenstoff-Kohlenstoff-Doppelbindung (WPU) größer 225 g/mol und deren Viskosität kleiner 2500 mPa·s (gemessen gemäß DIN 53019 bei 25°C) ist; oder
(iv) 50 Gew.-% oder mehr, bezogen auf die Reaktivharzkomponente, einer Verbindung mit mindestens zwei Kohlenstoff-Kohlenstoff-Doppelbindungen, deren gewichtsmittleres Molekulargewicht pro 10 Kohlenstoff-Kohlenstoff-Doppelbindung (WPU) größer 225 g/mol und deren Viskosität kleiner 2500 mPa·s (gemessen gemäß DIN 53019 bei 25°C) ist,
   und
   Gew.-% oder mehr, bezogen auf die Reaktivharzkomponente, einer Verbindung mit mindestens zwei Kohlenstoff-Kohlenstoff-Doppelbindungen, 15 deren gewichtsmittleres Molekulargewicht pro Kohlenstoff-Kohlenstoff-Doppelbindung (WPU) größer 125 g/mol und deren Viskosität kleiner 2500 mPa·s (gemessen gemäß DIN 53019 bei 25°C) ist, umfasst.

Ein zweiter Gegenstand der Erfindung ist ein Reaktivharz-System mit einer erfindungsgemäßen Reaktivharzkomponente (A) und einer Härterkomponente (B), die ein Härtungsmittel (wie etwa ein Peroxid) für die Härtung des Reaktivharzes enthält. Die Komponenten (A) und (B) sind bis zur Verwendung des Reaktivharz-Systems räumlich getrennt voneinander verpackt, damit erst eine Reaktion stattfindet, wenn die beiden Komponenten miteinander in Kontakt gebracht werden.

Ein dritter Gegenstand der Erfindung ist die Verwendung einer erfindungsgemäßen Reaktivharzkomponente und/oder eines erfindungsgemäßen Reaktivharz-Systems zur chemischen Befestigung von Verankerungsmitteln in Bohrlöchern oder zum baulichen Kleben.

Ein vierter Gegenstand der Erfindung ist die Verwendung von einer Kombination aus (a) einem Füllstoff aus Oxiden von Silizium, der mit einem Silan, das zur Teilnahme an der Polymerisierung mit der radikalisch härtbaren ungesättigten Verbindung befähigte reaktive Gruppen aufweist, modifiziert ist, wobei der Anteil an dem mindestens einen Füllstoff aus Oxiden von Silizium, der mit einem Silan, das zur Teilnahme an der Polymerisierung mit der radikalisch härtbaren ungesättigten Verbindung befähigte reaktive Gruppen aufweist, modifiziert ist, der einen Korndurchmesser von 4 µm oder kleiner aufweist, 0,5 bis 60 Gew.-% beträgt, bezogen auf die diesen Füllstoff enthaltende Reaktivharzkomponente, und (b) mindestens einer Verbindung mit mindestens zwei Kohlenstoff-Kohlenstoff-Doppelbindungen, deren gewichtsmittleres Molekulargewicht pro Kohlenstoff-Kohlenstoff-Doppelbindung (WPU) größer 225 g/mol und deren Viskosität kleiner 2500 mPa·s (gemessen gemäß DIN 53019 bei 25°C) ist, in einer Reaktivharzkomponente und/oder einem Reaktivharz-System für die chemische Befestigung zum Erhöhen der Leistungsfähigkeit der Reaktivharzkomponente und/oder des Reaktivharz-Systems.

Zum besseren Verständnis der Erfindung werden die folgenden Erläuterungen der hierin verwendeten Terminologie als sinnvoll erachtet. Im Sinne der Erfindung bedeuten:
- *"Reaktivharz"* eine üblicherweise feste oder hochviskose *"radikalisch härtbare",* d.h. polymerisierbare Verbindung, welche durch Polymerisation härtet und eine Harzmatrix bildet; das Reaktivharz ist das Umsetzungsprodukt einer Bulkreaktion an sich; hiervon ist auch der Reaktionsansatz zur Herstellung des Backbone-Harzes nach beendeter Reaktion umfasst, der ohne Isolierung des Produkts vorliegt und daher neben der radikalisch härtbaren Verbindung, das Reaktivharz, einen Reaktivverdünner, einen Stabilisator und einen Katalysator, sofern verwendet, enthalten kann;
- "*Reaktivverdünner"* flüssige oder niedrigviskose Monomere und Oligomere, welche das Reaktivharz verdünnen und dadurch die zu deren Applikation notwendige Viskosität verleihen, eine oder mehrere zur Reaktion mit dem Reaktivharz befähigte funktionelle Gruppen enthalten und bei der Polymerisation (Härtung) zum überwiegenden Teil Bestandteil der gehärteten Masse (Harzmatrix) werden;
- *"WPU"*, das gewichtsmittleren Molekulargewicht pro Kohlenstoff-Kohlenstoff-Doppelbindung, also der theoretische Wert, der sich ergibt, wenn das Molekulargewicht (g) der radikalisch härtbaren, ethylenisch ungesättigten Verbindung durch die Anzahl an reaktiver Doppelbindung in der radikalisch härtbaren, ethylenisch ungesättigten Verbindung, wie etwa eine Methacrylatfunktion, geteilt wird;

- "*Härtungsmittef* Stoffe, welche die Polymerisation (das Härten) des Reaktivharzes bewirken;
- "*Inhibitor"* ebenfalls eine zur Inhibierung der Polymerisationsreaktion (Härtung) fähige Verbindung, die dazu dient, die Polymerisationsreaktion und damit ein unerwünschtes vorzeitiges Polymerisieren des Reaktivharzes während der Lagerung zu vermeiden (in dieser Funktion oftmals auch als Stabilisator bezeichnet) und/oder den Start der Polymerisationsreaktion unmittelbar nach der Zugabe des Härtungsmittels zu verzögern; welche Aufgabe der Inhibitor hat, hängt davon ab, in welchen Mengen er eingesetzt wird;
- "*Beschleuniger"* eine zur Beschleunigung der Polymerisationsreaktion (Härtung) fähige Verbindung, die dazu dient, die Bildung von Radikalen zu beschleunigen;
- *"Füllstoff"* eine organische oder anorganische, insbesondere anorganische Verbindung, die passiv und/oder reaktiv und/oder funktional sein kann; "passiv" bedeutet dabei, dass die Verbindung unverändert von der härtenden Harzmatrix umschlossen wird; "reaktiv" bedeutet dabei, dass die Verbindung in die Harzmatrix einpolymerisiert und ein erweitertes Netzwerk mit dem Reaktivharz bildet; "funktional" bedeutet dabei, dass die Verbindung nicht in die Harzmatrix einpolymerisiert aber eine bestimmte Funktion in der Formulierung erfüllt, wobei in diesem Fall auch von *"Additiven"* gesprochen wird;
- *"Harzzusammensetzung"* eine Mischung aus dem Reaktivharz und anorganischen und/oder organischen Additiven und Füllstoffen, wie etwa einem Inhibitor und/oder einem Beschleuniger;
- "*Härterzusammensetzung"* eine Mischung aus dem Härtungsmittel und anorganischen und/oder organischen Füllstoffen, wie etwa ein Phlegmatisierungsmittel, d.h. Stabilisierungsmittel für das Härtungsmittel;
- *"hochgefüllte Härterzusammensetzung",* dass die Härterzusammensetzung eine überwiegende Menge an Füllstoffen, insbesondere anorganischen Füllstoffen und somit einen hohen Füllgrad von über 50 Vol.-% Füllstoffen aufweist;
- *"silanisierter Füllstoff'* ein Füllstoff, insbesondere ein anorganischer Füllstoff, wie Quarzmehl oder dergleichen, der mit einem Silan oberflächenbehandelt ist;
- *"zweikomponentiges Reaktivharzsystem"* ein Reaktivharzsystem, das zwei voneinander getrennt gelagerte Komponenten, im Allgemeinen eine Reaktivharzkomponente, enthaltend die Harzzusammensetzung, und eine Härterkomponente, enthaltend die Härterzusammensetzung, umfasst, so dass eine Härtung des Reaktivharzes erst nach dem Mischen der beiden Komponenten erfolgt;
- *"mehrkomponentiges Reaktivharzsystem"* ein Reaktivharzsystem, das mehrere voneinander getrennt gelagerte Komponenten umfasst, so dass eine Härtung des Reaktivharzes erst nach dem Mischen aller Komponenten erfolgt;
- *"(Meth)acryl...*/*...(meth)acryl...",* dass sowohl die "Methacryl.../...methacryl..."- als auch die "Acryl.../...acryl..."-Verbindungen umfasst sein sollen; bevorzugt sind in der vorliegenden Erfindung "Methacryl.../...methacryl..." -Verbindungen;
- "*ein", "eine", "einer"* als Artikel vor einer chemischen Verbindungsklasse, z.B. vor dem Wort "Reaktivverdünner", dass eine oder mehrere unter diese chemische Verbindungsklasse fallende Verbindungen, z.B. verschiedene *"Reaktivverdünner*", gemeint sein können;
- "*mindestens ein", "mindestens eine", "mindestens einer"* zahlenmäßig *"ein oder mehrere*"; in einer bevorzugten Ausführungsform ist mit diesem Begriff zahlenmäßig *"ein", "eine", "einer"* gemeint;
- *"enthalten", "umfassen"* und *"beinhalten",* dass neben den genannten Bestandteilen noch weitere vorhanden sein können; diese Begriffe sind einschließlich gemeint und umfassen daher auch *"bestehen aus"*; *"bestehen aus"* ist abschließend gemeint und bedeutet, dass keine weiteren Bestandteile vorhanden sein können; in einer bevorzugten Ausführungsform bedeuten die Begriffe *"enthalten", "umfassen"* und *"beinhalten"* den Begriff *"bestehen aus"*;
- ein durch Zahlen begrenzter Bereich, dass die beiden Eckwerte und jeder Wert innerhalb dieses Bereichs einzeln offenbart sind.

Alle in diesem Text genannten Normen (z.B. DIN-Normen) wurden in der zum Anmeldetag dieser Anmeldung aktuellen Ausgabe verwendet.

### Silanisierte Füllstoffe

Erfindungsgemäß enthält die Reaktivharzkomponente einen Füllstoff aus Oxiden von Silizium, der mit einem Silan, das zur Teilnahme an der Polymerisierung mit der radikalisch härtbaren ungesättigten Verbindung befähigte reaktive Gruppen aufweist, modifiziert ist.

Oxide von Silizium sind in erster Linie Siliziumdioxid, insbesondere Quarz, Silikate und dergleichen.

Bevorzugt ist der Füllstoff aus der Gruppe bestehend aus Siliziumdioxid in zusätzlicher Gegenwart von ein oder mehreren Oxiden ausgewählt aus Oxiden der Gruppe von Metallen, die insbesondere aus Calcium, Titan, Eisen, Natrium oder dergleichen besteht, ausgewählt, insbesondere aus Quarz oder Silikaten.

Erfindungsgemäß weist das zur Modifizierung der Füllstoffe verwendete Silan einerseits mindestens eine Si-gebundene hydrolysierbare Gruppe, wie Alkoxy (z.B. mit 1 bis 7 Kohlenstoffatomen) oder Halogeno, wie Chloro, und mindestens eine gegenüber der verwendeten radikalisch härtbaren ungesättigten Verbindung reaktiven Gruppe, wie etwa Kohlenstoff-Kohlenstoff-Doppelbindungen, z.B. in (Meth)acrylatgruppen, auf. Diese Füllstoffe werden hierin auch als "silanisierte Füllstoffe" bezeichnet.

Die Silane können beispielsweise aus der Gruppe, die insbesondere aus (Meth)acryloyl-oxypropyltrialkoxysilanen, wie 3-(Meth)acryloyl-oxypropyltrimethoxysilan und 3-(Meth)acryloyl-oxypropyltriethoxysilan und/oder Alkenylalkoxysilanen wie Vinyltrimethoxysilan oder Vinyltriethoxysilan; oder Gemischen von zwei oder mehr davon, ausgewählt sein. Bevorzugt sind die Silane aus der Gruppe bestehend aus 3-(Meth)acryloyloxypropyltrialkoxysilanen und Alkenylalkoxysilanen, und weiter bevorzugt aus der Gruppe der (Meth)acryloyloxypropyltrialkoxysilanen ausgewählt.

Besonders bevorzugt sind die Silane aus der Gruppe bestehend aus 3-(Meth)acryloyloxypropyltrimethoxysilan, 3-(Meth)acryloyloxypropyltriethoxysilan, 3-(Meth)acryloyl-oxymethyltrimethoxysilan, 3-(Meth)acryloyloxymethyltriethoxysilan, Vinyltrimethoxysilan, Vinyltriethoxysilan, Tetraethoxysilan, Tetramethoxysilan und Tetrapropoxysilan ausgewählt.

Erfindungsgemäß werden diese silanisierten Füllstoffe so ausgewählt, dass der Anteil an silanisierten Füllstoffen mit einem Korndurchmesser von 4 µm oder kleiner 0,5 bis 60 Gew.-%, bevorzugt 1 bis 50 Gew.-% und besonders bevorzugt 2,75 bis 26 Gew.-% beträgt, bezogen auf die Reaktivharzkomponente, die diese Füllstoffe enthält. Die Menge an Teilchen mit einem Korndurchmesser von 4 µm oder kleiner kann der Korngrößenverteilung entnommen werden, die von den Herstellern der Füllstoffe bereitgestellt werden.

Es ist auch denkbar, dass die Füllstoffe erst nach dem Herstellen der Reaktivharzkomponente mit den Silanen modifiziert werden. Dazu weist die Reaktivharzkomponente einen nicht mit Silanen modifizierten Füllstoff und ferner ein mindestens eine Si-gebundene hydrolysierbare Gruppe beinhaltendes Silan als Zusatz auf, wobei das Silan ein solches ist, wie es eben beschrieben wurde und der Füllstoff ein solcher ist, wie er eben beschrieben wurde.

### Zuschlagstoffe (Additive und Füllstoffe)

Gemäß einer Ausführungsform kann die Reaktivharzkomponente weitere andere anorganische Zuschlagstoffe, wie Füllstoffe und/oder weitere Zusätze enthalten, mit der Maßgabe, dass deren Oberfläche nicht mit Silanen, die zur Teilnahme an der Polymerisierung mit der radikalisch härtbaren ungesättigten Verbindung befähigte reaktive Gruppen aufweisen, modifiziert sind.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerde- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Bevorzugt und deutlicher verstärkend wirken sich jedoch die globulären, inerten Stoffe (Kugelform) aus.

Weitere denkbare Zusätze sind ferner Rheologieadditive, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich.

### Füllgrad

Erfindungsgemäß beträgt der Anteil aller anorganischen und organischen Feststoffe in dem mehrkomponentigen Reaktivharzsystemlin der ersten Komponente mindestens 60 Gew.-%, insbesondere 60 bis 90 Gew.-%, bevorzugt 60 bis 85 Gew.-%, weiter bevorzugt 65 bis 85 Gew.-%, stärker bevorzugt 65 bis 80 Gew.-% und noch stärker bevorzugt 65 bis 75 Gew.-%, jeweils bezogen auf die Reaktivharzkomponente.

Wie bereits oben erwähnt, beträgt dabei der Anteil an dem mindestens einen Füllstoff aus Oxiden von Silizium, der mit einem Silan, das zur Teilnahme an der Polymerisierung mit der radikalisch härtbaren ungesättigten Verbindung befähigte reaktive Gruppen aufweist, modifiziert ist, also der silanisierte Füllstoff, mit einem Korndurchmesser von 4 µm oder kleiner, 0,5 bis 60 Gew.-%, bevorzugt 1 bis 50 Gew.-% und besonders bevorzugt 2,75 bis 26 Gew.-% , jeweils bezogen auf die Reaktivharzkomponente.

Die Anwesenheit der silanisierten Füllstoffe erlaubt es, die Reaktivharzkomponente über den normal üblichen und bei kommerziellen Produkten verwendeten Füllgrad hinauszugehen, ohne dass dies negative Auswirken auf die Eigenschaften sowohl der Mörtelmasse, wie Viskosität und damit verbunden die Auspresskräfte oder die Mischgüte, als auch der ausgehärteten Mörtelmasse, wie der Schrumpf oder die Leistungsfähigkeit, hat.

### Hydraulisch abbindende Verbindung

Bei einer Ausführungsform der Erfindung enthält die Reaktivharzkomponente neben der vorhandenen radikalisch härtbaren Verbindung zusätzlich noch eine hydraulisch abbindende oder polykondensierbare anorganische Verbindung, insbesondere Zement. Derartige Hybridmörtelsysteme sind ausführlich in DE 4231161 A1 beschrieben. Dabei enthält die Reaktivharzkomponente vorzugsweise als hydraulisch abbindende oder polykondensierbare anorganische Verbindung Zement, beispielsweise Portlandzement oder Aluminatzement, wobei übergangsmetalloxidfreie oder übergangsmetallarme Zemente besonders bevorzugt sind. Als hydraulisch abbindende anorganische Verbindung kann auch Gips als solcher oder in Mischung mit dem Zement eingesetzt werden. Die Reaktivharzkomponente kann als polykondensierbare anorganische Verbindung auch silikatische, polykondensierbare Verbindungen, insbesondere lösliches, gelöstes und/oder amorphes Siliziumdioxid enthaltende Stoffe wie z.B. pyrogene Kieselsäure umfassen.

Die hydraulisch abbindende oder polykondensierbare Verbindung kann in einer Menge von 0 bis 40 Gew.-%, bevorzugt 5 bis 30 Gew.-%, besonders bevorzugt 10 bis 30 Gew.-%, bezogen auf die Reaktivharzkomponente, in dem Reaktivharzsystem enthalten sein.

Sind hydraulisch abbindende oder polykondensierbare Verbindungen in dem Reaktionssystem enthalten, so liegt die Gesamtmenge an Füllstoffen im oben genannten bereich. Dementsprechend beträgt die Gesamtmenge an Füllstoffen, einschließlich der hydraulisch abbindenden und polykondensierbaren Verbindungen mindestens 60 Gew.-%, insbesondere 60 bis 90 Gew.-%, bevorzugt 65 bis 85 Gew.-%, weiter bevorzugt 65 bis 85 Gew.-%, stärker bevorzugt 65 bis 80 Gew.-% und noch stärker bevorzugt 65 bis 75 Gew.-%, jeweils bezogen auf die Reaktivharzkomponente.

### Radikalisch härtbare ungesättigte Verbindung

Geeignete radikalisch härtbare ungesättigte Verbindungen, die sowohl als Reaktivharz als auch als Reaktivverdünner verwendet werden können, sind solche, wie sie üblicherweise für Reaktivharz-Systeme zur Verwendung für die chemische Befestigung beschrieben werden.

Geeignete radikalisch härtbare Verbindungen als Reaktivharz sind ungesättigte Verbindungen, Verbindungen mit Kohlenstoff-Kohlenstoff-Dreifachbindungen und Thiol-Yn/En-Harze geeignet, wie sie dem Fachmann bekannt sind.

Besonders bevorzugt ist die radikalisch härtbare ungesättigte Verbindung, das Reaktivharz, eine Verbindung auf Urethan(meth)acrylatbasis, Epoxy(meth)acrylatbasis, ein Methacrylat eines alkoxylierten Bisphenols oder auf Basis weiterer ungesättigter Verbindungen.

Von diesen Verbindungen ist die Gruppe der ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1, WO 02/051903 A1 und WO 10/108939 A1 beschrieben sind. Vinylesterharze (synonym: (Meth)acrylatharze) sind dabei aufgrund ihrer hydrolytischen Beständigkeit und ausgezeichneten mechanischen Eigenschaften am stärksten bevorzugt. Ganz besonders bevorzugt sind Vinylesterurethanharze, insbesondere Urethanmethacrylate. Zu diesen zählen als bevorzugte Harze die in der DE 102011 017 626 B4 beschriebenen Urethanmethacrylatharze. Diesbezüglich wird die DE 10 2011 017 626 B4, und vor allem ihre Beschreibung der Zusammensetzung dieser Harze, insbesondere in den Beispielen der DE 10 2011 017 626 B4, hier durch Bezugnahme aufgenommen.

Beispiele geeigneter ungesättiger Polyester, die erfindungsgemäß verwendet werden können, werden in folgende Kategorien eingeteilt, wie sie durch M. Malik et al. in J. M. S. - Rev. Macromol. Chem. Phys., C40 (2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diesen Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion einer Dicarbonsäure, z.B. Maleinsäure, mit Dicyclopentadienyl, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere, Präpolymere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigte Gruppen aufweisen, werden zum Beispiel durch Umsetzung von Epoxid-Oligomeren oder -Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomers oder -Polymers mit Methacrylsäure oder Methacrylamid, bevorzugt mit Methacrylsäure, und gegebenfalls mit einem Kettenverlängerer, wie etwa Diethylenglykol oder Dipropylenglykol, erhalten werden. Beispiele solcher Verbindungen sind aus den Anmeldungen US 3 297 745 A, US 3 772 404 A, US 4 618 658 A, GB 2 217 722 A1, DE 37 44 390A1 und DE 41 31 457 A1 bekannt.

Als Vinylesterharz besonders geeignet und bevorzugt sind (Meth)acrylatfunktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden. Ganz besonders geeignet und bevorzugt sind die in DE 10 2011 017 626 B4 beschriebenen Urethanmethacrylatharze (die auch als Vinylesterurethanharze bezeichnet werden), deren Zusammensetzung hier durch Bezugnahme aufgenommen wird.

Als Isocyanate können aliphatische (cyclische oder lineare) und/oder aromatische dioder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische dioder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, Neopentylglycolmono(meth)acrylat geeignet. Bevorzugt sind Acryl- bzw. Methacrylsäurehydroxyalkylester, wie Hydroxyethyl(meth)acrylat, Hydroxypropyl(meth)acrylat, Polyoxyethylen(meth)acrylat, Polyoxypropylen(meth)acrylat, zumal solche Verbindungen der sterischen Hinderung der Verseifungsreaktion dienen. Acrylsäure ist wegen ihrer geringeren Alkalistabilität weniger bevorzugt als am Kohlenwasserstoffrest substituierte Acrylsäuren.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglycol, Propandiol, Dipropylenglycol, andere Diole, wie 1,4-Butandiol, 1,6-Hexandiol, Neopentylglycol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

All diese Reaktivharze, die erfindungsgemäß als radikalisch härtbare ungesättigte Verbindungen verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Reaktivharz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind.

In einer Ausführungsform enthält die Reaktivharzkomponente des Reaktivharzsystems zusätzlich zu dem Reaktivharz mindestens eine weitere niederviskose, radikalisch polymerisierbare ungesättigte Verbindung als Reaktivverdünner. Diese wird zweckmäßig zu dem Reaktivharz gegeben und ist daher in der Reaktivharzkomponente enthalten.

Geeignete, insbesondere niederviskose, radikalisch härtbare ungesättigte Verbindungen als Reaktivverdünner sind in den Anmeldungen EP 1 935 860 A1 und DE 195 31 649 A1 beschrieben. Vorzugsweise enthält das Reaktivharzsystem als Reaktivverdünner einen (Meth)acrylsäureester, wobei besonders bevorzugt (Meth)acrylsäureester ausgewählt werden aus der Gruppe bestehend aus Hydroxypropyl(meth)acrylat, Propandiol-1,3-di(meth)acrylat, Butandiol-1,2-di(meth)acrylat, Trimethylolpropantri(meth)acrylat, 2-Ethylhexyl(meth)acrylat, Phenylethyl-(meth)acrylat, Tetrahydrofurfuryl(meth)acrylat, Ethyltriglykol(meth)acrylat, N,N-Dimethylaminoethyl(meth)acrylat, N,N-Dimethylaminomethyl(meth)acrylat, Butandiol-1,4-di(meth)acrylat, Butandiol-1,3-di(meth)acrylat, Hexandiol-1,6-di(meth)acrylat, Acetoacetoxyethyl(meth)acrylat, Ethandiol-1,2-di(meth)acrylat, Isobornyl(meth)acrylat, Di-, Tri- oder Oligo ethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1,0.^{2.6}-decan, Dicyclopentenyloxyethylcrotonat, 3-(Meth)acryloyl-oxymethyl-tricylo-5.2.1 .0.^{2.6}-decan, 3-(Meth)cyclopentadienyl(meth)-acrylat, Isobornyl(meth)acrylat und Decalyl-2-(meth)acrylat. Biogene Reaktivverdünner wie Tetrahydrofurfuryl(meth)acrylat ,lsobornyl(meth)acrylat oder Isosorbiddi(meth)acrylat sind bevorzugt.

Der Reaktivverdünner kann allein oder als Mischung aus zwei oder mehreren Reaktivverdünnern eingesetzt werden.

Grundsätzlich können auch andere übliche radikalisch polymerisierbaren Verbindungen, allein oder im Gemisch mit den im vorhergehenden Absatz beschriebenen (Meth)acrylsäureestern, eingesetzt werden, z.B. Styrol, α-Methylstyrol, alkylierte Styrole, wie tert-Butylstyrol, Divinylbenzol und Vinyl- sowie Allylverbindungen. Beispiele für derartige Vinyl- oder Allylverbindungen sind Hydroxybutylvinylether, Ethylenglycoldivinylether, 1,4-Butandioldivinylether, Trimethylolpropandivinylether, Trimethylolpropantrivinylether, Mono-, Di-, Tri-, Tetra- und Polyalkylenglycolvinylether, Mono-, Di-, Tri-, Tetra- und Polyalkylenglycolallylether, Adipinsäuredivinylester, Trimethylolpropandiallylether und Trimethylolpropantriallylether.

Besonders bevorzugte Reaktivverdünner sind die in den Beispielen verwendeten Reaktivverdünner.

Die radikalisch härtbare ungesättigte Verbindung kann in einer Menge von 10 bis 40 Gew.-%, bevorzugt 15 bis 35 Gew.-%, besonders bevorzugt 25 bis 35 Gew.-%, bezogen auf die Reaktivharzkomponente, in dem Reaktivharzsystem enthalten sein. Hierbei kann die radikalisch härtbare Verbindung entweder ein Reaktivharz auf Basis einer radikalisch härtbaren Verbindung oder ein Reaktivverdünner oder eine Mischung eines Reaktivharzes mit ein, zwei oder mehreren Reaktivverdünnern sein.

Für den Fall, dass die radikalisch härtbare ungesättigte Verbindung eine Reaktivharzmischung ist, so entspricht die Menge der Mischung, die in dem Reaktivharzsystem enthalten sein kann, der Menge der radikalisch härtbaren Verbindung, nämlich von 10 bis 40 Gew.-%, bevorzugt 15 bis 35 Gew.-%, besonders bevorzugt 25 bis 35 Gew.-%, bezogen auf die Reaktivharzkomponente, wobei, bezogen auf die Reaktivharzmischung, der Anteil des Reaktivharzes 0 bis 100 Gew.-%, bevorzugt 30 bis 70 Gew.-% und der Anteil des Reaktivverdünners oder einer Mischung aus mehreren Reaktivverdünnern 0 bis 100 Gew.-%, bevorzugt 30 bis 70 Gew.-% beträgt.

Die Gesamtmenge der radikalisch härtbaren Verbindung hängt von dem Füllgrad, also der Menge der anorganischen Füllstoffe, einschließlich der weiteren anorganischen Zuschlagstoffe und der hydraulisch abbindenden bzw. polykondensierbaren Verbindungen, sofern diese in der Reaktivharzkomponente enthalten sind.

Erfindungsgemäß ist die mindestens eine radikalisch härtbare Verbindung eine Verbindung oder eine Mischung aus mehreren Verbindungen. Die Verbindung bzw. die Verbindungen der Mischung sind so aus den oben näher beschriebenen Gruppen ausgewählt, dass eine der folgenden Bedingungen erfüllt ist, welche die Gruppen (i) bis (iv) definieren:
(i) 35 Gew.-% oder mehr, bevorzugt 37 Gew.-% oder mehr, jeweils bezogen auf die Reaktivharzkomponente, einer Verbindung mit einem gewichtsmittleren Molekulargewicht pro Kohlenstoff-Kohlenstoff-Doppelbindung (WPU) größer 230 g/mol und einer Viskosität größer 2500 mPa·s (gemessen gemäß DIN 53019 bei 25°C), oder
(ii) 30 Gew.-% oder mehr, bevorzugt 33 Gew.-% oder mehr, jeweils bezogen auf die Reaktivharzkomponente, einer Verbindung mit einem gewichtsmittleren Molekulargewicht pro Kohlenstoff-Kohlenstoff-Doppelbindung (WPU) größer 230 g/mol und einer Viskosität größer 2500 mPa·s (gemessen gemäß DIN 53019 bei 25°C) und
   10 Gew.-% oder mehr, bezogen auf die Reaktivharzkomponente, einer Verbindung mit einem gewichtsmittleren Molekulargewicht pro Kohlenstoff-Kohlenstoff-Doppelbindung (WPU) größer 125 g/mol und einer Viskosität kleiner 2500 mPa·s (gemessen gemäß DIN 53019 bei 25°C), oder
(iii) 57 Gew.-% oder mehr, bevorzugt 60 Gew.-% oder mehr, jeweils bezogen auf die Reaktivharzkomponente, einer Verbindung mit einem gewichtsmittleren Molekulargewicht pro Kohlenstoff-Kohlenstoff-Doppelbindung (WPU) größer 225 g/mol und einer Viskosität kleiner 2500 mPa·s (gemessen gemäß DIN 53019 bei 25°C), oder
(iv) 50 Gew.-% oder mehr, bevorzugt 53 Gew.-% oder mehr, jeweils bezogen auf die Reaktivharzkomponente, einer Verbindung mit einem gewichtsmittleren Molekulargewicht pro Kohlenstoff-Kohlenstoff-Doppelbindung (WPU) größer 225 g/mol und einer Viskosität kleiner 2500 mPa·s (gemessen gemäß DIN 53019 bei 25°C) und
   10 Gew.-% oder mehr, bezogen auf die Reaktivharzkomponente, einer Verbindung mit einem gewichtsmittleren Molekulargewicht pro Kohlenstoff-Kohlenstoff-Doppelbindung (WPU) größer 125 g/mol und einer Viskosität kleiner 2500 mPa·s (gemessen gemäß DIN 53019 bei 25°C).

Verbindungen mit mindestens zwei Kohlenstoff-Kohlenstoff-Doppelbindungen, welche die Bedingung (i) erfüllen, also in die Gruppe (i) fallen, sind insbesondere Verbindungen auf Urethan(meth)acrylatbasis, Epoxy(meth)acrylatbasis, ein Methacrylat von alkoxylierten Bisphenolen oder auf Basis weiterer ethylenisch ungesättigter Verbindungen.

Verbindungen mit mindestens zwei Kohlenstoff-Kohlenstoff-Doppelbindungen, welche die zweite der Bedingung (ii) oder die zweite Bedingung (iv) erfüllen sind Verbindungen mit einem gewichtsmittleren Molekulargewicht pro Kohlenstoff-Kohlenstoff-Doppelbindung (WPU) größer 125 g/mol und einer Viskosität kleiner 2500 mPa·s (gemessen gemäß DIN 53019 bei 25°C). Diese können mit den Verbindungen aus der Gruppe (i) und/oder (iii) gemischt werden.

Diese Verbindungen sind bevorzugt (Meth)acrylsäureester, die aus der folgenden Gruppe ausgewählt sind: Propandiol-1,3-di(meth)acrylat, Butandiol-1,2-di(meth)acrylat, Trimethylolpropantri(meth)acrylat, Butandiol-1,4-di(meth)acrylat, Butandiol-1,3-di(meth)acrylat, Hexandiol-1,6-di(meth)acrylat, Ethandiol-1,2-di(meth)acrylat, Tricyclopentadienyldi(meth)acrylat, Bisphenol-A-di(meth)acrylat, Novolakepoxidi(meth)acrylat, Di-[(meth)acryloyl-maleoyl]-tricyclo-5.2.1.0.^{2.6}-decan und ethoxyliertem Glykoldimethacrylat.

Verbindungen mit mindestens zwei Kohlenstoff-Kohlenstoff-Doppelbindungen, welche die Bedingung (iii) erfüllen, also in die Gruppe (iii) fallen, sind insbesondere Di-, Tri- oder Oligoethylenglykoldi(meth)acrylate, bevorzugt Di-, Tri- und Tetraethylenglykoldi(meth)acrylat.

Durch die Verwendung von Tricyclodecandimethanoldiacrylat, ethoxyliertem Bisphenol-A-dimethacrylat, insbesondere zwei-, drei- oder vierfach ethoxyliertem Bisphenol-A-dimethacrylat, und ethoxyliertem Glykoldimethacrylat in Verbdindung mit den silanisierten Füllstoffen wird erreicht, dass die Leistungsfähigkeit der ausgehärteten Masse nicht nur in hochfestem Beton, wie etwa C50/60, sondern auch in Beton mit geringerer Druckfestigkeit, wie etwa C20/25 Beton, gesteigert werden kann.

Oben aufgeführte Verbindungen, welche nicht die Bedingungen (i) bis (iv) bzw. nicht in eine der Gruppen (i) bis (iv) fallen, können zusätzlich verwendet werden. Insbesondere werden niederviskose Verbindungen eingesetzt, um die Viskosität der Reaktivharzkomponente einzustellen und/oder gegebenenfalls die festen radikalisch härtbaren Verbindungen zu lösen und zugänglich zu machen.

### Beschleuniger

In einer weiteren Ausführungsform enthält das Reaktivharzsystem des Weiteren mindestens einen Beschleuniger. Hierdurch wird die Härtungsreaktion beschleunigt.

Geeignete Beschleuniger sind dem Fachmann bekannt. Diese sind zweckmäßig Amine.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis-(2-hydroxyethyl)-oleylamin, Tris-[2-(2-hydroxy-ethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methylbis-(2-hydroxypropyl)amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Diethylamino-2-pentanon, 3-Methylaminopropionsäurenitril, 6-Aminohexansäure, 11-Aminoundecansäure, 6-Aminohexansäureethylester, 11-Aminohexansäureisopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diaminodicyclohexylmethan, Diamino-dimethyl-dicyclohexylmethan, Phenylendiamin, Xylylendiamin, Diaminobiphenyl, Naphthalindiamine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind symmetrisch oder asymmetrisch substituierten Anilin- und Toluidin-Derivate und N,N-Bis(hydroxy)alkylarylamine, wie N,N,-Dimethylanilin, N,N-Diethylanilin, N,N-Dimethyl-p-toluidin, N,N-Bis(hydroxyalkyl)arylamine, N,N-Bis(2-hydroxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin, N-Methyl-N-hydroxyethyl-p-toluidin, N-Ethyl-N-hydroxyethyl-p-toluidin sowie die analogen o- oder m-Toluidine und 4,4'-Bis(dimethylamino)diphenylmethan und/oder die Leucoformen der Farbstoffe Kristallviolett oder Malachitgrün.

Polymere Amine, wie solche die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Bevorzugte Beschleuniger sind N,N-Bis(2-hydroxypropyl)toluidine, N,N-Bis(2-hydroxyethyl)toluidine und para-Toluidin Ethoxylat (Bisomer^{®} PTE).

Der Beschleuniger kann in einer Menge von 0,01 bis 10 Gew.-%, bevorzugt 0,5 bis 5 Gew.-%, besonders bevorzugt 0,5 bis 3 Gew.-%, bezogen auf die Reaktivharzkomponente, in den Reaktivharzsystem enthalten sein.

### Inhibitoren

In einer noch weiteren Ausführungsform enthält die Reaktivharzkomponente des Weiteren einen Inhibitor sowohl für die Lagerstabilität des Reaktivharzes und der Reaktivharzkomponente als auch zur Einstellung der Gelzeit. Der Inhibitor kann allein oder zusammen mit dem Beschleuniger in dem Reaktivharzsystem enthalten sein. Bevorzugt wird zur Einstellung der Verarbeitungszeit bzw. Gelzeit eine entsprechend aufeinander abgestimmte Beschleuniger-Inhibitor-Kombination eingesetzt.

Als Inhibitoren sind die für radikalisch polymerisierbare Verbindungen üblicherweise verwendeten Inhibitoren geeignet, wie sie dem Fachmann bekannt sind. Bevorzugt sind die Inhibitoren unter phenolischen Verbindungen und nicht-phenolischen Verbindungen, wie stabilen Radikalen und/oder Phenothiazinen, ausgewählt.

Als phenolische Inhibitoren sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin und Butylbrenzkatechine, wie 4-tert-Butylbrenzkatechin, 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, geeignet.

Als nicht-phenolische oder anaerobe, d.h. im Gegensatz zu den phenolischen Inhibitoren auch ohne Sauerstoff wirksame Inhibitoren kommen vorzugsweise Phenothiazine, wie Phenothiazin und/oder Derivate oder Kombinationen davon, oder stabile organische Radikale, wie Galvinoxyl- und N-oxyl-Radikale in Betracht.

Als N-Oxyl-Radikale können beispielsweise solche verwendet werden, wie sie in der DE 199 56 509 beschrieben sind. Geeignete stabile N-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-Oxyl Verbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen.

Diese Verbindungen sind besonders deshalb sinnvoll und meist erforderlich, da sonst die anzustrebende Lagerstabilität von vorzugsweise mehr als 3 Monaten, insbesondere 6 Monaten oder mehr, nicht erreicht werden kann. Die UV- und insbesondere die Lagerstabilität können so beträchtlich erhöht werden.

Ferner können in para-Stellung zur Hydroxylgruppe substituierte Pyrimidinol- oder Pyridinol-Verbindungen, wie sie in der Patentschrift DE 10 2011 077 248 B1 beschrieben sind, als Inhibitoren eingesetzt werden.

Bevorzugte Inhibitoren sind 1-Oxyl-2,2,6,6-tetramethylpiperidin (TEMPO) und 1-Oxyl-2,2,6,6-tetramethylpiperidin-4-ol (TEMPOL), Katechole, besonders bevorzugt tert-ButylBrenzkatechin und Brenzkatechin durch die funktionelle Gruppe werden die gewünschten Eigenschaften erreicht (im Vergleich zu den sonst verwendeten Reaktivverdünnern), BHT und Phenothiazin.

Die Inhibitoren können, abhängig von den gewünschten Eigenschaften des Reaktivharzsystems, entweder allein oder als Kombination von zweien oder mehreren davon verwendet werden. Die Kombination der phenolischen und der nicht-phenolischen Inhibitoren ermöglicht dabei einen synergistischen Effekt, wie auch die Einstellung einer im Wesentlichen driftfreien Einstellung der Gelzeit der Reaktivharz-Zusammensetzung zeigt.

Der Inhibitor kann in einer Menge von 0,001 bis 5 Gew.-%, bevorzugt 0,01 bis 3 Gew.-%, besonders bevorzugt 0,05 bis 1 Gew.-%, bezogen auf die Reaktivharzkomponente, in den Reaktivharzsystem enthalten sein. Sind mehrere Inhibitoren enthalten, so entspricht die eben genannte Menge der Gesamtmenge an Inhibitoren.

Die Kombination aus einem silanisierten Füllstoff auf Siliziumoxidbasis und der radikalisch härtbaren Verbindung, insbesondere der radikalisch härtbaren Verbindung aus der oben beschriebenen Gruppe (iii) wird vorteilhaft in einem Reaktivharz-System für die chemische Befestigung verwendet, um den Füllstoffanteil zu erhöhen und die Leistungsfähigkeit, d.h. die Lastwerte, zu steigern.

Demnach ist ein weiterer Gegenstand der Erfindung die Verwendung von einer Kombination aus (a) einem Füllstoff aus Oxiden von Silizium, der mit einem Silan, das zur Teilnahme an der Polymerisierung mit der radikalisch härtbaren ungesättigten Verbindung befähigte reaktive Gruppen aufweist, modifiziert ist, und mit gegebenenfalls weiteren anderen anorganischen Zusätzen, wobei der Anteil an dem mindestens einen Füllstoff aus Oxiden von Silizium, der mit einem Silan, das zur Teilnahme an der Polymerisierung mit der radikalisch härtbaren ungesättigten Verbindung befähigte reaktive Gruppen aufweist, modifiziert ist, der einen Korndurchmesser von 4 µm oder kleiner aufweist, 0,5 bis 60 Gew.-%, bevorzugt 1 bis 50 Gew.-% und besonders bevorzugt 2,75 bis 26 Gew.-% beträgt, jeweils bezogen auf eine Reaktivharzkomponente, und (b) mindestens einer Verbindung mit mindestens zwei Kohlenstoff-Kohlenstoff-Doppelbindungen, deren gewichtsmittleres Molekulargewicht pro Kohlenstoff-Kohlenstoff-Doppelbindung (WPU) größer 225 g/mol und deren Viskosität kleiner 2500 mPa·s (gemessen gemäß DIN 53019 bei 25°C) ist, in einer Reaktivharzkomponente und/oder einem Reaktivharz-System für die chemische Befestigung zum Erhöhen der Leistungsfähigkeit der Reaktivharzkomponente und/oder des Reaktivharz-Systems.

Die erfindungsgemäße Reaktivharzkomponente kann vorteilhaft in einem mehrkomponentigen Reaktivharzsystem, was auch zweikomponentige Reaktivharzsysteme miteinschließt, als Harzkomponente verwendet werden.

Ein weiterer Gegenstand der Erfindung ist demnach ein mehrkomponentiges Reaktivharzsystem, umfassend die oben beschriebene Reaktivharzkomponente und eine Härterkomponente. Die Härterkomponente enthält mindestens einen Initiator, d.h. ein Härtungsmittel für die radikalisch härtbare ungesättigte Verbindung.

### Härterkomponente

### Härtungsmittel für radikalisch härtbare ungesättigte Verbindung

Alle dem Fachmann bekannten Peroxide, die zum Härten von Methacrylatharzen verwendet werden können, können eingesetzt werden. Derartige Peroxide umfassen organische und anorganische Peroxide, entweder flüssig oder fest. Beispiele geeigneter, organischer Peroxide sind Peroxycarbonate (der Formel -OC(O)OO-), Peroxyester (der Formel -C(O)OO-), Diacylperoxide (der Formel -C(O)OOC(O)-), Dialkylperoxide (der Formel -OO-) und dergleichen. Diese können als Oligomer oder Polymer vorliegen. Eine umfassende Reihe an Beispielen für geeignete Peroxide ist zum Beispiel in der Anmeldung US 2002/0091214 A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie tert-Butylperester (z.B. tert-Butylperoxybenzoat), Benzoylperoxid, Peracetate und Perbenzoate, Lauroylperoxid, einschließlich (Di)peroxyester, Perether, wie Peroxydiethylether, Perketone, wie Methylethylketoneperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden sind. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. Bevorzugt wird zum Härten Benzoylperoxid bzw. Dibenzoylperoxid (BPO) oder tert-Butylperoxybenzoat verwendet.

Als anorganische Peroxide können insbesondere Persulfate, Perborate und/oder Perphosphate, wie Ammoniumpersulfat, Kalium- und Natriummonopersulfate oder Kalium- und Natriumdipersulfate, verwendet werden. Aber auch Wasserstoffperoxid kann verwendet werden.

Auch die Verwendung von organisch substituierten Ammoniumpersulfaten (beispielsweise N'N'N'N'-Tetrabutylammonium- oder N'-Capryl-N'N'N'-trimethylammoniumpersulfat ist möglich.

Neben dem Peroxid enthält erfindungsgemäß die Härterzusammensetzung noch ein Phlegmatisierungsmittel um das Peroxid zu stabilisieren. Entsprechende Phlegmatisierungsmittel sind aus der DE 3226602 A1, EP 0432087 A1 und EP 1 371 671 A1 bekannt.

Die Härterzusammensetzung enthält bevorzugt Wasser als Phlegmatisierungsmittel. Neben dem Wasser kann die Härterzusammensetzung noch weitere Phlegmatisierungsmittel enthalten, wobei Wasser als alleiniges Phlegmatisierungsmittel bevorzugt ist, um keine Verbindungen einzubringen, die eine weichmachende Wirkung haben.

Bevorzugt liegt das Peroxid zusammen mit dem Wasser als Suspension vor. Entsprechende Suspensionen sind in unterschiedlichen Konzentrationen kommerziell erhältlich, wie beispielsweise die wässrigen Dibenzoylperoxid-Suspensionen von United Initiators (BP40SAQ), Perkadox 40L-W (Fa. Nouryon), Luperox^{®} EZ-FLO (Fa. Arkema), Peroxan BP40W (Fa. Pergan).

Das Peroxid kann in einer Menge von 2 bis 50 Gew.-%, bevorzugt 5 bis 45 Gew.-%, besonders bevorzugt 10 bis 40 Gew.-%, bezogen auf die Härterzusammensetzung, in den Reaktivharzsystem enthalten sein.

Neben Wasser und dem Härtungsmittel kann die Härterkomponente zusätzlich weitere Additive, namentlich Emulgatoren, Frostschutzmittel, Puffer und/oder Rheologieadditive, und/oder Füllstoffe enthalten.

Geeignete Emulgatoren sind: ionische, nichtionische oder amphotere Tenside; Seifen, Netzmittel, Detergenzien; Polyalkylenglycolether; Salze von Fettsäuren, Mono- oder Diglyceride von Fettsäuren, Zuckerglyceride, Lecithin; Alkansulfonate, Alkylbenzolsulfonate, Fettalkoholsulfate, Fettalkoholpolyglycolether, Fettalkoholethersulfate, sulfonierte Fettsäuremethylester; Fettalkoholcarboxylate; Alkylpolyglycoside, Sorbitanester, N-Methylglucamide, Saccharoseester; Alkylphenole, Alkylphenolpolyglycolether, Alkylphenolcarboxylate; quartäre Ammoniumverbindungen, Esterquats, Carboxylate quartärer Ammoniumverbindungen.

Geeignete Frostschutzmittel sind: organische oder anorganische, wasserlösliche Zusätze, die die Einfriertemperatur des Wassers herabsetzen; Mono-, bi- oder höherfunktionelle Alkohole, wie Ethanol, n- oder iso-Propanol, n-, iso- oder tert.-Butanol usw.; Ethylenglycol, 1,2- oder 1,3-Propylenglycol, Glycerol, Trimethylolpropan usw. Oligo- oder Polyglycole, wie Dialkylenglycole, Trialkylenglycole usw.; Zucker, insbesondere Mono- oder Disaccharide; Triosen, Tetrosen, Pentosen und Hexosen in ihrer Aldehyl- oder Ketoform sowie der analogen Zuckeralkohole. Beispiele, aber nicht einschränkend, sind Glycerinaldehyd, Fructose, Glucose, Saccharose, Mannitol usw..

Geeignete Puffer sind organische oder anorganische Säure/Base-Paare, die den pH-Wert der Härterkomponente stabilisieren, wie Essigsäure/Alkaliacetat, Zitronensäure/Monoalkalicitrat, Monoalkali-/Dialkalicitrat, Dialkali-/Trialkalicitrat, Kombinationen von mono-, di- und/oder tri-basichen Alkaliphosphaten ggf. mit Phosphorsäure; Ammoniak mit Ammoniumsalzen; Kohlensäure-Bicarbonat-Puffer usw. Verwendet werden können auch intramolekulare, sogenannte Good-Puffer, wie 4-(2-Hydroxyethyl)-1-piperazinethanesulfonsäure (HEPES) oder 2-(N-Morpholino)ethansulfonsäure (MES) sowie Tris(hydroxymethyl)-aminomethan (TRIS) usw..

Die Einstellung der Fließeigenschaften erfolgt über den Zusatz von verdickenden Substanzen, auch Rheologieadditive genannt. Geeignete Rheologieadditive sind: Schichtsilikaten wie Laponiten, Bentonen oder Montmorillonit, Neuburger Kieselerde, pyrogenen Kieselsäuren, Polysacchariden; Polyacrylat-, Polyurethan- oder Polyharnstoffverdickern sowie Celluloseestern. Zur Optimierung können weiterhin Netzund Dispergiermittel, Oberflächenadditive, Entschäumer & Entlüfter, Wachsadditive, Haftvermittler, Viskositätsreduzierer oder Prozessadditive zugesetzt werden.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Bevorzugt und deutlicher verstärkend wirken sich jedoch die globulären, inerten Stoffe (Kugelform) aus.

Die Füllstoffe liegen in der Härterkomponente vorzugsweise in einer Menge von bis zu 80, insbesondere 0 bis 60, vor allem 0 bis 50 Gew.-% vor.

In einer besonders bevorzugten Ausführungsform sind die Bestandteile der erfindungsgemäßen Reaktivharzkomponente eines oder mehrere der Bestandteile, welche in den erfindungsgemäßen Beispielen genannt werden. Ganz besonders bevorzugt sind Reaktivharzkomponenten, welche dieselben Bestandteile enthalten oder aus denselben Bestandteilen bestehen, wie sie in den einzelnen erfindungsgemäßen Beispielen genannt werden, und zwar bevorzugt in etwa in den dort genannten Anteilen.

Die erfindungsgemäßen Reaktivharzkomponenten sind in vielen Bereichen, bei denen sonst üblicherweise ungesättigte Polyesterharze, Vinylesterharze oder Vinylesterurethanharze Verwendung finden, einsetzbar. Sie können insbesondere zur Herstellung von Reaktivharzmörteln für bauliche Anwendungen, wie die chemische Befestigung verwendet werden.

Die erfindungsgemäße Reaktivharzkomponente findet üblicherweise Verwendung in einem Zweikomponenten-System aus einer Reaktivharzkomponente (A) und einer Härterkomponente (B). Dieses Mehrkomponenten-System kann in Form eines Patronen-Systems, eines Kartuschen-Systems oder eines Folienbeutel-Systems vorliegen. Bei der bestimmungsgemäßen Verwendung des Systems werden die Komponenten entweder unter Einwirkung mechanischer Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und in das Bohrloch eingeführt, wonach die zu befestigenden Einrichtungen, wie Ankergewindestangen und dergleichen, in das mit dem aushärtenden Reaktivharz beschickte Bohrloch eingebracht und entsprechend justiert werden.

Ein solches Reaktivharz-System findet vor allem im Baubereich Verwendung, etwa zur Instandsetzung von Beton, als Polymerbeton, als Beschichtungsmasse auf Kunstharzbasis oder als kalthärtende Straßenmarkierung. Besonders eignet es sich zur chemischen Befestigung von Verankerungsmitteln, wie Ankern, Bewehrungseisen, Schrauben und dergleichen, in Bohrlöchern, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen.

Ein weiterer Gegenstand der Erfindung ist die Verwendung der erfindungsgemäßen Reaktivharzkomponente und/oder eines Reaktivharz-Systems als Bestandteil eines aushärtbaren Bindemittels oder als aushärtbares Bindemittel, insbesondere zur Befestigung von Verankerungsmitteln in Bohrlöchern verschiedenen Untergrunds und zum baulichen Kleben. In einer Ausführungsform ist der Untergrund des Bohrlochs Beton, und das Verankerungsmittel besteht aus Stahl oder Eisen.

Die Erfindung wird im Folgenden anhand einer Reihe von Beispielen näher erläutert. Alle Beispiele und Abbildungen stützen den Umfang der Ansprüche. Die Erfindung ist jedoch nicht auf die spezifischen, in den Beispielen und Abbildungen gezeigten Ausführungsformen beschränkt.

### AUSFÜHRUNGSBEISPIELE

Alle hier aufgelisteten Bestandteile der Zusammensetzungen sind - soweit nicht anders angegeben - kommerziell erhältlich und wurden in der kommerziell üblichen Qualität eingesetzt.

Alle in den Beispielen gemachten %-Angaben beziehen sich auf das Gesamtgewicht der beschriebenen Zusammensetzung als Kalkulationsbasis, soweit nicht anders angegeben.

Liste der in den Beispielen und Referenzen verwendeten Bestandteile (Erklärung der Abkürzungen) sowie ihrer Handelsnamen und Bezugsquellen:

| **Rohstoff** | **Bemerkung** | **Firma/Hersteller** |
|---|---|---|
| SILBOND^{®} 600 MST | Quarzmehl, oberflächenbehandelt mit Methacrylsilan; d₅₀ = 4 µm; 55 Gew.-% Partikel < 4 µm; Schüttdichte (DIN EN ISO 60) 0,6 g/cm³; Spez. Oberfläche (DIN ISO 9277) BET 3,0 m²/g | Quarzwerke GmbH, Ferchen |
| SIKRON^{®} SF800 | Quarzfeinstmehl, oberflächenbehandelt mit Methacrylsilan; d₅₀ = 4 µm; 78 Gew.-% Partikel < 4 µm; Schüttdichte (DIN EN ISO 60) 0,42 g/cm³; Spez. Oberfläche (DIN ISO 9277) BET 6,0 m²/g | Quarzwerke GmbH, Ferchen |
| SIKRON^{®} SF500 | Quarzfeinstmehl, oberflächenbehandelt mit Methacrylsilan; d₅₀ = 2 µm; 55 Gew.-% Partikel < 4 µm; Schüttdichte (DIN EN ISO 60) 0,58 g/cm³; Spez. Oberfläche (DIN ISO 9277) BET 3,9 m²/g | Quarzwerke GmbH, Ferchen |
| modifiziertes SIKRON^{®} SF500 | mit Methacrylsilan behandeltes SIKRON^{®} SF500 | Siehe unten |
| modifiziertes SIKRON^{®} SF800 | mit Methacrylsilan behandeltes SIKRON^{®} SF800 | Siehe unten |
| F32 | Quarzsand F32 | Quarzwerke GmbH, Ferchen |
| UMA | Urethanmethacrylat, hergestellt aus Isomerengemisch Diphenylmethandiisocyanat, Dipropylenglykol und HPMA | hergestellt nach der EP 0713015 A1 |
| mUMA | Urethanmethacrylat, hergestellt aus 4,4'-Diphenylmethandiisocyanat, Dipropylenglykol und HPMA | hergestellt nach der EP 3424968 A1 (Verbindung (V)) |
| TUMA | Urethanmethacrylat, hergestellt aus Toluol-2,4-diisocyanat und HPMA | hergestellt nach der EP 3424968 A1 (Verbindung (IV)) |
| XUMA | Urethanmethacrylat, hergestellt aus 1,3-Xylylendiisocyanat und HPMA | hergestellt nach der EP 3424972 A1 (Verbindung (IV) |
| HPMA | 2-Hydroxypropylmethacrylat | Evonik AG |
| BDDMA | 1,4-Butandioldimethacrylat | Evonik Degussa GmbH |
| TCDDMA | Tricyclodecandimethanoldimethacrylat | Sartomer Europe |
| E2BADMA | zweifach ethoxyliertes Bisphenol-A-dimethacrylat | Sartomer Europe |
| E3BADMA | dreifach ethoxyliertes Bisphenol-A-dimethacrylat | Sartomer Europe |
| E4BADMA | vierfach ethoxyliertes Bisphenol-A-dimethacrylat | Sartomer Europe |
| HDDMA | 1,6-Hexandioldimethacrylat | Evonik AG |
| PEG200DMA | Polyethylenglykol-200-dimethacrylat | Evonik AG |
| Dippt | Di-*iso-*propyl-p-toluidin | Saltigo |
| Brenzkatechin (BC) | 1,2-Dihydroxybenzol | Rhodia |
| TBC | 4-tert.-Butylbrenzcatechin | Rhodia |

### Herstellung von modifiziertem SIKRON^{®} SF800 (mod. SIKRON^{®} SF800) bzw. SIKRONO SF500 (mod. SIKRONO SF500)

In einem 1 Liter Kunststoffbecher werden 584g Quarzmehl (z.B. SIKRON^{®} SF800, SIKRONO SF500) mit 12g 3-(Meth)acryloyloxypropyltrimethoxysilan versetzt und am Taumelmischer 15 min vorgemischt. Dann wird eine Mischung aus 0,36g Triethylamin und 3,6g vollentionisiertes Wasser zum Quarzmehl gegeben und 2 Stunden am Taumelmischer gemischt. Zuletzt lässt man das Quarzmehl für 36 Stunden bei 50°C trocknen.

Um die Qualität der Modifizierung zu prüfen, wird das Quarzmehl mit Petroleumbenzin extrahiert und der Extrakt mittels IR-Spektroskopie untersucht. Die Qualität gilt als zufriedenstellend, wenn im Extrakt kein 3-(Meth)acryloyloxypropyltrimethoxysilan oder deren Kondensationsprodukte mehr zu sehen sind.

### Bestimmung der Viskosität der radikalisch härtbaren ungesättigten Verbindungen

Die Messung der dynamischen Viskosität der Reaktivharze erfolgte mit einem Kegel-Platte Messsystem nach DIN 53019. Der Durchmesser des Kegels betrug 60mm für Proben kleiner 200 mPas und 20mm für Proben größer 20 mPas. Der Öffnungswinkel ist 1°. Es wurde bei einer konstanten Schergeschwindigkeit von 150/s und einer Temperatur von 25°C gemessen (wenn keine abweichende Angabe bei den Messdaten gemacht wird). Die Messdauer betrug 180s und jede Sekunde wurde ein Messpunkt generiert. Zur Erreichung der Schergeschwindigkeit wurde eine Rampe von 0-150/s mit einer Dauer 30 von 120s vorgeschaltet. Da es sich um newtonschen Flüssigkeiten handelt, wurde über den Messabschnitt mit konstanter Schergeschwindigkeit von 150/s eine lineare Auswertung über den Messabschnitt vorgenommen und die Viskosität bestimmt.

In den Beispielformulierungen verwendete radikalisch härtbare ungesättigte Verbindungen mit mindestens Kohlenstoff-Kohlenstoff-Doppelbindungen, deren berechnete WPU und deren Viskositätsbereich:

| | WPU [g/mol] | Viskositätsbereich [mPas, 25°C] |
|---|---|---|
| UMA* | 333 | >2500 |
| mUMA* | 269 | >2500 |
| TUMA* | 231 | >2500 |
| XUMA* | 238 | >2500 |
| bisGMA* | 270 | >2500 |
| 1,4-BDDMA | 113 | <2500 |
| 1,6-HDDMA | 127 | <2500 |
| TCDDMA | 161 | <2500 |
| PEG200DMA | 165 | <2500 |
| E2BADMA | 226 | <2500 |
| E3BADMA | 248 | <2500 |
| E4BADMA | 286 | <2500 |

| | | |
|---|---|---|
| *Bei Raumtemperatur mit der genannten Methode aufgrund sehr hohen Viskosität nicht messbar. Werte abgeschätzt. | | |

### Messung der Verbundspannunq

Zunächst wurden Reaktivharzkomponenten (A) mit den in den Tabellen 1 und 2 angegebenen Bestandteilen, deren verwendete Mengen ebenfalls den Tabellen 1 und 2 entnommen werden können, hergestellt, indem zuerst alle löslichen Bestandteilt gemischt und solange gerührt wurden bis eine homogene Mischung entstanden ist. Dann wurden alle nicht löslichen Bestandteile hinzugefügt und per Hand vorgerührt. Zum Schluss wurde im Dissolver unter Vakuum mit einem PC Laborsystem Dissolver vom Typ LDV 0.3-1 vermischt. Die Masse wurde für 8 Minuten bei 3500 U/min unter Vakuum (p≤100 mbar) mit einer 55 mm Dissolverscheibe und einem Randabstreifer dezentral gerührt.

Ein Reaktivharzsystem aus den Reaktivharzkomponenten (A) aus den Tabellen 1 und 2 und der als Härterkomponente (B) eingesetzten kommerziellen Härterkomponente HY-200 B (Hilti) wurde in eine Plastikkartusche (Firma Ritter GmbH; Volumenverhältnis A:B = 5:1) mit den Innendurchmessern 32,5 mm (Komponente (A)) bzw. 14 mm (Komponente (B)) gefüllt und wie folgt getestet:
Zur Ermittlung der Verbundspannungen der ausgehärteten Befestigungsmassen wurden Ankergewindestanden M12 in Bohrlöcher in Beton C20/25 bzw. C50/60 mit einem Durchmesser von 14 mm und einer Bohrlochtiefe von 60 mm, die mit den Befestigungsmassen gefüllt wurden, eingeführt. Hierbei handelte es sich um gereinigte, staubfreie, trockene, hammergebohrte Bohrlöcher. Die Befestigungsmassen wurden über einen Statikmischer (Mischer HIT-RE-M; Hilti Aktiengesellschaft) aus den Kartuschen ausgepresst und in die Bohrlöcher injiziert. Die Aushärtung erfolgte bei 20°C. Die Temperatur des Zweikomponenten-Reaktivharz-Systems bzw. der Befestigungsmasse betrug beim Setzen 20°C. Die Verbundspannungen wurden durch zentrisches Ausziehen der Ankergewindestangen ermittelt, wobei eine Abstützung zum Beton von 18 mm Durchmesser verwendet wurde. Es wurden jeweils fünf Ankergewindestangen gesetzt und nach 24 Stunden Aushärtung die Lastwerte bestimmt und die Verbundspannung berechnet.

Die hierbei ermittelten Verbundspannungen (N/mm²) sind als Mittelwert von fünf Messungen in der nachfolgenden Tabelle 1 aufgeführt.

Die Verbundspannungen für die Messungen im C50/60-Beton sind in der Tabelle 1 und die Verbundspannungen für die Messungen im C20/25-Beton sind in der Tabelle 2 angegeben.

Wie aus Tabelle 1 ersichtlich ist, steigen die Verbundspannungen durch die Zugabe der silanisierten Füllstoffe im hochfesten Beton an. Aus Tabelle 2 wird ersichtlich, dass durch die Verwendung von radikalisch härtbaren Verbindungen aus der Gruppe (iii), insbesondere TCDDMA, E2BADMA, E4BADMA, PEG200DMA und HDDMA, die Verbundspannungen auch in Beton mit niedriger Druckfestigkeit ansteigen.

**Tabelle 1: Verbundspannung τ in C50/60 Beton**

| **Beispiel** | **Ref . 1** | **Ref .2** | **Ref .3** | **Ref .4** | **1** | **2** | **3** | **4** | **5** | **6** |
|---|---|---|---|---|---|---|---|---|---|---|
| | | | | | | | | | | |
| SIKRON^{®} SF800 | | | | 5 | | | | | | |
| SILBOND^{®} 600 MST | | | | | | 15 | 22, 1 | | 15 | 15 |
| mod. SIKRON^{®} SF800 | | | | | 5 | | | 22, 1 | | |
| F32 | 44, 2 | 36, 7 | 38, 7 | 39, 2 | 39, 2 | 23, 7 | 22, 1 | 22, 1 | 29, 2 | 29, 2 |
| UMA | 12, 9 | | | | | | 12, 9 | 12, 9 | | |
| mUMA | | 17, 2 | 16, 4 | 14, 1 | 14, 1 | | | | 14, 1 | |
| TUMA | | | | | | | | | | 15, 5 |
| XUMA | | | | | | 17, 3 | | | | |
| HPMA | 6,9 | 6,4 | 6,1 | 5,3 | 5,3 | 5,3 | 6,9 | 6,9 | 5,3 | 5,3 |
| BDDMA | 13, 8 | 17, 2 | 16, 4 | 14, 1 | 14, 1 | 11, 0 | 13, 9 | 13, 9 | 14, 1 | 12, 8 |
| TCDDMA | | | | | | | | | | |
| | | | | | | | | | | |
| Dippt + Brenzkatechol + TBC | 0,9 | 1,1 | 1,1 | 0,9 | 0,9 | 0,9 | 0,9 | 0,9 | 0,9 | 0,9 |
| | | | | | | | | | | |
| Füllgrad *) [Gew.-%] | 65, 5 | 58 | 60 | 65, 5 | 65, 5 | 60 | 65, 5 | 65, 5 | 65, 5 | 65, 5 |
| | | | | | | | | | | |
| **τ [N/mm²]** | **35, 7** | **36, 0** | **37, 3** | **37, 5** | **39, 3** | **39, 1** | **40, 5** | **40, 7** | **39, 1** | **38, 7** |

| | | | | | | | | | | |
|---|---|---|---|---|---|---|---|---|---|---|
| *) Gesamtmenge aller anorganischen Feststoffe | | | | | | | | | | |

**Tabelle 1 (Forts.): Verbundspannung τ in C50/60 Beton**

| **Beispiel** | **7** | **8** | **9** | **10** | **11** | **12** |
|---|---|---|---|---|---|---|
| | | | | | | |
| SIKRON^{®} SF800 | | | | | | |
| SILBOND^{®} 600 MST | 15 | 24,5 | 15 | 15 | 15 | 15 |
| mod. SIKRON^{®} SF800 | | | | | | |
| F32 | 29,2 | 24,5 | 34,1 | 34,1 | 29,2 | 34,1 |
| UMA | | 11,2 | | | | |
| mUMA | | | 12,3 | | 13,2 | 11,4 |
| TUMA | 13,5 | | | | | |
| XUMA | | | | 20 | | |
| HPMA | 4,6 | 6 | 4,6 | 6,1 | 6,1 | 5,3 |
| BDDMA | 11,1 | 12 | 12,3 | 12,8 | 9,6 | 8,3 |
| TCDDMA | | | | | 10 | 8,6 |
| | | | | | | |
| Dippt + Brenzkatecho I + TBC | 0,8 | 0,8 | 0,8 | 1,1 | 1,1 | 0,9 |
| | | | | | | |
| Füllgrad *) [Gew.-%] | 65,5 | 70 | 70 | 70 | 65,5 | 70 |
| | | | | | | |
| **τ [N/mm²]** | **39,6** | **39,3** | **39,3** | **39,2** | **39,2** | **40,4** |

| | | | | | | |
|---|---|---|---|---|---|---|
| *) Gesamtmenge aller anorganischen Feststoffe | | | | | | |

**Tabelle 2: Verbundspannung τ in C20/25 Beton**

| **Beispiel** | **Ref. 5** | **13** | **14** | **15** | **16** | **17** | **18** | **19** | **20** | **21** | **22** | **23** | **24** | **25** |
|---|---|---|---|---|---|---|---|---|---|---|---|---|---|---|
| | | | | | | | | | | | | | | |
| SILBOND^{®} 600 MST | | 22,1 | | 15 | 15 | 15 | 24,5 | 24,5 | 24,5 | 24,5 | 24,5 | 15 | 10 | 5 |
| mod. SIKRON^{®} SF800 | | | 15 | | | | | | | | | | | |
| F32 | 44,2 | 22,1 | 34,1 | 34,1 | 34,1 | 34,1 | 24,5 | 24,5 | 24,5 | 24,5 | 24,5 | 34,1 | 39 | 44 |
| | | | | | | | | | | | | | | |
| UMA | 12,9 | | 11,2 | | | | | | | | | | | |
| mUMA | | 12,9 | | | | 12,3 | 9,9 | 9,9 | 11,1 | 11,1 | 9,9 | 9,9 | 9,9 | 9,9 |
| TUMA | | | | 13,5 | | | | | | | | | | |
| XUMA | | | | 15 | | | | | | | | | | |
| HPMA | 6,9 | 6,9 | 6 | 4,6 | 4,6 | 4,6 | 4,6 | 4,6 | 4,6 | 4,6 | 4,6 | 4,6 | 4,6 | 4,6 |
| BDDMA | 13,8 | 13,8 | 12 | 9,6 | 11,1 | 12,3 | 3,3 | 7,2 | 6 | 6 | 7,2 | 7,2 | 7,2 | 7,2 |
| TCDDMA | | | | | | | 11,4 | 7,5 | 7,5 | 7,5 | 7,5 | 7,5 | 7,5 | 7,5 |
| | | | | | | | | | | | | | | |
| Dippt + Brenzkatechol + TBC | 0,9 | 0,9 | 0,8 | 0,8 | 0,8 | 0,8 | 0,8 | 0,8 | 0,8 | 0,8 | 0,8 | 0,8 | 0,8 | 0,8 |
| | | | | | | | | | | | | | | |
| Füllgrad *) [Gew.-%] | 65,5 | 65,5 | 70 | 70 | 70 | 70 | 70 | 70 | 70 | 70 | 70 | 70 | 70 | 70 |
| | | | | | | | | | | | | | | |
| **τ [N/mm²]** | **31,9** | **35,6** | **35,5** | **37,3** | **35,9** | **34,5** | **37,8** | **37,4** | **36,9** | **38,3** | **39,3** | **38,0** | **36,9** | **37,3** |

| | | | | | | | | | | | | | | |
|---|---|---|---|---|---|---|---|---|---|---|---|---|---|---|
| *) Gesamtmenge aller anorganischen Feststoffe | | | | | | | | | | | | | | |

**Tabelle 2 (Forts. 1): Verbundspannung τ in C20/25 Beton**

| **Beispiel** | **26** | **27** | **28** | **29** | **30** | **31** | **32** | **33** | **34** | **35** | **36** | **37** | **38** |
|---|---|---|---|---|---|---|---|---|---|---|---|---|---|
| SILBOND^{®} 600 MST | 3 | 2 | 1 | 15 | 15 | 15 | 15 | 15 | 15 | 24,5 | 24,5 | 24,5 | 15 |
| F32 | 46,1 | 47,1 | 48,1 | 34,1 | 34,1 | 34,1 | 34,1 | 34,1 | 34,1 | 24,5 | 24,5 | 24,5 | 34,1 |
| | | | | | | | | | | | | | |
| mUMA | 9,9 | 9,9 | 9,9 | 9,9 | 9,9 | 11,1 | 11,1 | 11,1 | 11,1 | 9,9 | 9,9 | 9,9 | 9,9 |
| HPMA | 4,6 | 4,6 | 4,6 | 4,6 | 4,6 | 4,6 | 4,6 | 4,6 | 4,6 | 4,6 | 4,6 | 4,6 | 4,6 |
| BDDMA | 7,2 | 7,2 | 7,2 | 8,7 | 8,7 | 10,5 | 7,5 | 10,5 | 7,5 | 7,2 | 8,7 | 10,2 | 11,7 |
| TCDDMA | 7,5 | 7,5 | 7,5 | 3 | | | | | | | | | |
| E2BADMA | | | | | 6 | | | | | | | | 3 |
| E4BADMA | | | | 3 | | | | | | 7,5 | 6 | 4,5 | |
| PEG200DMA | | | | | | 3 | 6 | | | | | | |
| HDDMA | | | | | | | | 3 | 6 | | | | |
| | | | | | | | | | | | | | |
| DiPpT+ Brenzkatechol + TBC | 0,8 | 0,8 | 0,8 | 0,8 | 0,8 | 0,8 | 0,8 | 0,8 | 0,8 | 0,8 | 0,8 | 0,8 | 0,8 |
| | | | | | | | | | | | | | |
| Füllgrad *) [Gew.-%] | 70 | 70 | 70 | 70 | 70 | 70 | 70 | 70 | 70 | 70 | 70 | 70 | 70 |
| | | | | | | | | | | | | | |
| **τ [N/mm²]** | **33,5** | **34,5** | **34,3** | **38,1** | **35,9** | **36,5** | **37,4** | **37,3** | **36,4** | **36,2** | **36,8** | **37,2** | **36,0** |

| | | | | | | | | | | | | | |
|---|---|---|---|---|---|---|---|---|---|---|---|---|---|
| *) Gesamtmenge aller anorganischen Feststoffe | | | | | | | | | | | | | |

**Tabelle 2 (Forts. 2): Verbundspannung τ in C20/25 Beton**

| **Beispiel** | **39** | **40** | **41** | **42** | **43** | **44** | **45** | **46** | **47** | **48** | **49** | **50** |
|---|---|---|---|---|---|---|---|---|---|---|---|---|
| SILBOND^{®} 600 MST | 15 | | 15 | 15 | 15 | 15 | 15 | | | 15 | 15 | 15 |
| mod. SIKRON^{®} SF800 | | 15 | | | | | | | | | | |
| mod. SIKRON^{®} SF500 | | | | | | | | 15 | 5 | | | |
| F32 | 34,1 | 34,1 | 34,1 | 34,1 | 34,1 | 34,1 | 34,1 | 34,1 | 44,1 | 34,1 | 34,1 | 34,1 |
| mUMA | 9,9 | 9,9 | | | | | | 9,9 | 9,9 | 9,9 | | |
| TUMA | | | | | | | 12 | | | | | |
| XUMA | | | | | | 12,9 | | | | | | |
| bisGMA | | | | | | | | | | | 9,9 | 9,9 |
| HPMA | 4,6 | 4,6 | 4,6 | 4,6 | 4,6 | 4,6 | 4,6 | 4,6 | 4,6 | 4,6 | 4,6 | 4,6 |
| BDDMA | 10,2 | 7,2 | 6,6 | 4,2 | 5,7 | 7,2 | 8,1 | 7,2 | 7,2 | 8,7 | 8,7 | 8,7 |
| TCDDMA | | 7,5 | | 4,5 | | 4,5 | 4,5 | 7,5 | 7,5 | 6 | 6 | |
| E2BADMA | 4,5 | | 18 | 15,9 | 15,9 | | | | | | | |
| E3BADMA | | | | | | | | | | | | 6 |
| E4BADMA | | | | | 3 | | | | | | | |
| | | | | | | | | | | | | |
| Dippt + Brenzkatechol + TBC | 0,8 | 0,8 | 0,8 | 0,8 | 0,8 | 0,8 | 0,8 | 0,8 | 0,8 | 0,8 | 0,8 | 0,8 |
| | | | | | | | | | | | | |
| Füllgrad *) [Gew.-%] | 70 | 70 | 70 | 70 | 70 | 70 | 70 | 70 | 70 | 70 | 70 | 70 |
| | | | | | | | | | | | | |
| **τ [N/mm²]** | **35,9** | **36,9** | **32,6** | **33** | **34,0** | **35,3** | **34,6** | **34,1** | **33,3** | **33,3** | **35,1** | **34,1** |

| | | | | | | | | | | | | |
|---|---|---|---|---|---|---|---|---|---|---|---|---|
| *) Gesamtmenge aller anorganischen Feststoff | | | | | | | | | | | | |

## Patentansprüche

1. Reaktivharzkomponente mit mindestens einer radikalisch härtbaren ungesättigten Verbindung und mindestens einem Füllstoff aus Oxiden von Silizium, der mit einem Silan, das zur Teilnahme an der Polymerisierung mit der radikalisch härtbaren ungesättigten Verbindung befähigte reaktive Gruppen aufweist, modifiziert ist, und mit gegebenenfalls weiteren anderen anorganischen Zusätzen, wobei der Anteil aller anorganischen Feststoffe in der Reaktivharzkomponente mindestens 60 Gew.-% beträgt und dass der Anteil an dem mindestens einen Füllstoff aus Oxiden von Silizium, der mit einem Silan, das zur Teilnahme an der Polymerisierung mit der radikalisch härtbaren ungesättigten Verbindung befähigte reaktive Gruppen aufweist, modifiziert ist, der einen Korndurchmesser von 4 µm oder kleiner aufweist, 0,5 bis 60 Gew.-% beträgt, bezogen auf die Reaktivharzkomponente, **dadurch gekennzeichnet, dass**
die radikalisch härtbare ungesättigte Verbindung
(i) 35 Gew.-% oder mehr, bezogen auf die Reaktivharzkomponente, einer Verbindung mit mindestens zwei Kohlenstoff-Kohlenstoff-Doppelbindungen, deren gewichtsmittleres Molekulargewicht pro Kohlenstoff-Kohlenstoff-Doppelbindung (WPU) größer 230 g/mol und deren Viskosität größer 2500 mPa·s (gemessen gemäß DIN 53019 bei 25°C) ist, oder
(ii) 30 Gew.-% oder mehr, bezogen auf die Reaktivharzkomponente, einer Verbindung mit mindestens zwei Kohlenstoff-Kohlenstoff-Doppelbindungen, deren gewichtsmittleres Molekulargewicht pro Kohlenstoff-Kohlenstoff-Doppelbindung (WPU) größer 230 g/mol und deren Viskosität größer 2500 mPa·s (gemessen gemäß DIN 53019 bei 25°C) ist, und
10 Gew.-% oder mehr, bezogen auf die Reaktivharzkomponente, einer Verbindung mit mindestens zwei Kohlenstoff-Kohlenstoff-Doppelbindungen, deren gewichtsmittleres Molekulargewicht pro Kohlenstoff-Kohlenstoff-Doppelbindung (WPU) größer 125 g/mol und deren Viskosität kleiner 2500 mPa·s (gemessen gemäß DIN 53019 bei 25°C) ist; oder
(iii) 57 Gew.-% oder mehr, bezogen auf die Reaktivharzkomponente, einer Verbindung mit mindestens zwei Kohlenstoff-Kohlenstoff-Doppelbindungen, deren gewichtsmittleres Molekulargewicht pro Kohlenstoff-Kohlenstoff-Doppelbindung (WPU) größer 225 g/mol und deren Viskosität kleiner 2500 mPa·s (gemessen gemäß DIN 53019 bei 25°C) ist; oder
(iv) 50 Gew.-% oder mehr, bezogen auf die Reaktivharzkomponente, einer Verbindung mit mindestens zwei Kohlenstoff-Kohlenstoff-Doppelbindungen, deren gewichtsmittleres Molekulargewicht pro Kohlenstoff-Kohlenstoff-Doppelbindung (WPU) größer 225 g/mol und deren Viskosität kleiner 2500 mPa·s (gemessen gemäß DIN 53019 bei 25°C) ist, und
10 Gew.-% oder mehr, bezogen auf die Reaktivharzkomponente, einer Verbindung mit mindestens zwei Kohlenstoff-Kohlenstoff-Doppelbindungen, deren gewichtsmittleres Molekulargewicht pro Kohlenstoff-Kohlenstoff-Doppelbindung (WPU) größer 125 g/mol und deren Viskosität kleiner 2500 mPa·s (gemessen gemäß DIN 53019 bei 25°C) ist,
umfasst.

2. Reaktivharzkomponente nach Anspruch 1, wobei der Füllstoff aus der Gruppe bestehend aus Siliziumdioxid in zusätzlicher Gegenwart von ein oder mehreren Oxiden ausgewählt aus Oxiden der Gruppe von Metallen, die insbesondere aus Calcium, Titan, Eisen, Natrium oder dergleichen besteht, ausgewählt ist, insbesondere aus Quarz oder Silikaten.

3. Reaktivharzkomponente nach Anspruch 1 oder 2, wobei das Silan aus der Gruppe bestehend aus 3-(Meth)acryloyloxypropyltrimethoxysilan, 3-(Meth)acryloyloxypropyltriethoxysilan, 3-(Meth)acryloyloxymethyltrimethoxysilan, 3-(Meth)acryloyloxymethyltriethoxysilan, Vinyltrimethoxysilan, Vinyltriethoxysilan, Tetraethoxysilan, Tetramethoxysilan und Tetrapropoxysilan ausgewählt ist.

4. Reaktivharzkomponente nach einem der vorhergehenden Ansprüche, wobei die Verbindung mit mindestens zwei Kohlenstoff-Kohlenstoff-Doppelbindungen, deren gewichtsmittleres Molekulargewicht pro Kohlenstoff-Kohlenstoff-Doppelbindung (WPU) größer 230 g/mol und deren Viskosität größer 2500 mPa·s (gemessen gemäß DIN 53019 bei 25°C) ist, eine Verbindung auf Urethan(meth)acrylatbasis, Epoxy(meth)acrylatbasis, ein Methacrylat eines alkoxylierten Bisphenols oder auf Basis weiterer ungesättigter Verbindungen ist.

5. Reaktivharzkomponente einem der vorhergehenden Ansprüche, wobei die Verbindung mit mindestens zwei Kohlenstoff-Kohlenstoff-Doppelbindungen, deren gewichtsmittleres Molekulargewicht pro Kohlenstoff-Kohlenstoff-Doppelbindung (WPU) größer 225 g/mol und deren Viskosität kleiner 2500 mPa·s (gemessen gemäß DIN 53019 bei 25°C) ist, aus der Gruppe bestehend aus Tricyclodecandimethanoldiacrylat, ethoxylierten Bisphenol-A-dimethacrylaten und ethoxyliertem Glykoldimethacrylat ausgewählt ist.

6. Reaktivharzkomponente nach einem der vorhergehenden Ansprüche, ferner enthaltend mindestens einen Beschleuniger und mindestens einen Inhibitor.

7. Reaktivharzkomponente nach einem der vorhergehenden Ansprüche, ferner enthaltend eine hydraulisch abbindende oder polykondensierbare Verbindung.

8. Reaktivharzkomponente nach einem der vorhergehenden Ansprüche, ferner enthaltend weitere anorganische und/oder organische Zuschlagstoffe.

9. Mehrkomponentiges Reaktivharzsystem mit einer Reaktivharzkomponente (A) nach einem der Ansprüche 1 bis 8 und einer Härterkomponente (B), die ein Härtungsmittel für die radikalisch härtbare ungesättigte Verbindung enthält.

10. Verwendung von einer Kombination aus (a) einem Füllstoff aus Oxiden von Silizium, der mit einem Silan, das zur Teilnahme an der Polymerisierung mit der radikalisch härtbaren ungesättigten Verbindung befähigte reaktive Gruppen aufweist, modifiziert ist, und mit gegebenenfalls weiteren anderen anorganischen Zusätzen, wobei der Anteil an dem mindestens einen Füllstoff aus Oxiden von Silizium, der mit einem Silan, das zur Teilnahme an der Polymerisierung mit der radikalisch härtbaren ungesättigten Verbindung befähigte reaktive Gruppen aufweist, modifiziert ist, der einen Korndurchmesser von 4 µm oder kleiner aufweist, 0,5 bis 60 Gew.-% beträgt, bezogen auf eine Reaktivharzkomponente, und (b) mindestens einer Verbindung mit mindestens zwei Kohlenstoff-Kohlenstoff-Doppelbindungen, deren gewichtsmittleres Molekulargewicht pro Kohlenstoff-Kohlenstoff-Doppelbindung (WPU) größer 225 g/mol und deren Viskosität kleiner 2500 mPa·s (gemessen gemäß DIN 53019 bei 25°C) ist, in einer Reaktivharzkomponente nach einem der Ansprüche 1 bis 8, und/oder einem Reaktivharz-System nach Anspruch 9 für die chemische Befestigung zum Erhöhen der Leistungsfähigkeit der Reaktivharzkomponente und/oder des Reaktivharz-Systems.

11. Verwendung nach Anspruch 10, wobei die mindestens eine Verbindung mit mindestens zwei Kohlenstoff-Kohlenstoff-Doppelbindungen aus der Gruppe bestehend aus Tricyclodecandimethanoldiacrylat, ethoxylierten Bisphenol-A-dimethacrylaten und ethoxyliertem Glykoldimethacrylat ausgewählt ist.

12. Verwendung nach Anspruch 10 oder 11, wobei der Füllstoff aus der Gruppe bestehend aus Siliziumdioxid in zusätzlicher Gegenwart von ein oder mehreren Oxiden ausgewählt aus Oxiden der Gruppe von Metallen, die insbesondere aus Calcium, Titan, Eisen, Natrium oder dergleichen besteht, ausgewählt ist, insbesondere aus Quarz oder Silikaten.

## Claims

1. Reactive resin component comprising at least one radically curable unsaturated compound and at least one filler made of oxides of silicon, which filler is modified with a silane that has reactive groups capable of participating in the polymerization with the radically curable unsaturated compound, and optionally comprising other different inorganic additives, the proportion of all inorganic solids in the reactive resin component being at least 60 wt.% and that the proportion of the at least one filler made of oxides of silicon, which filler is modified with a silane that has reactive groups capable of participating in the polymerization with the radically curable unsaturated compound and which has a grain diameter of 4 µm or smaller, is 0.5 to 60 wt.%, based on the reactive resin component,
**characterized in that**
the radically curable unsaturated compound comprises
(i) 35 wt.% or more, based on the reactive resin component, of a compound having at least two carbon-carbon double bonds, the weight-average molecular weight of which per carbon-carbon double bond (WPU) is greater than 230 g/mol and the viscosity of which is greater than 2500 mPa·s (measured in accordance with DIN 53019 at 25°C); or
(ii) 30 wt.% or more, based on the reactive resin component, of a compound having at least two carbon-carbon double bonds, the weight-average molecular weight of which per carbon-carbon double bond (WPU) is greater than 230 g/mol and the viscosity of which is greater than 2500 mPa·s (measured in accordance with DIN 53019 at 25°C), and
10 wt.% or more, based on the reactive resin component, of a compound having at least two carbon-carbon double bonds, the weight-average molecular weight of which per carbon-carbon double bond (WPU) is greater than 125 g/mol and the viscosity of which is less than 2500 mPa·s (measured in accordance with DIN 53019 at 25°C); or
(iii) 57 wt.% or more, based on the reactive resin component, of a compound having at least two carbon-carbon double bonds, the weight-average molecular weight of which per carbon-carbon double bond (WPU) is greater than 225 g/mol and the viscosity of which is less than 2500 mPa·s (measured in accordance with DIN 53019 at 25°C); or
(iv) 50 wt.% or more, based on the reactive resin component, of a compound having at least two carbon-carbon double bonds, the weight-average molecular weight of which per carbon-carbon double bond (WPU) is greater than 225 g/mol and the viscosity of which is less than 2500 mPa·s (measured in accordance with DIN 53019 at 25°C), and
10 wt.% or more, based on the reactive resin component, of a compound having at least two carbon-carbon double bonds, the weight-average molecular weight of which per carbon-carbon double bond (WPU) is greater than 125 g/mol and the viscosity of which is less than 2500 mPa·s (measured in accordance with DIN 53019 at 25°C).

2. Reactive resin component according to claim 1, wherein the filler is selected from the group consisting of silicon dioxide in the additional presence of one or more oxides selected from oxides from the group of metals, which consists in particular of calcium, titanium, iron, sodium or the like, the filler in particular being selected from the group consisting of quartz or silicates.

3. Reactive resin component according to either claim 1 or claim 2, wherein the silane is selected from the group consisting of 3-(meth)acryloyloxypropyltrimethoxysilane, 3-(meth)acryloyloxypropyltriethoxysilane, 3-(meth)acryloyloxymethyltrimethoxysilane, 3-(meth)acryloyloxymethyltrimethoxysilane, vinyltrimethoxysilane, vinyltriethoxysilane, tetraethoxysilane, tetramethoxysilane and tetrapropoxysilane.

4. Reactive resin component according to any one of the preceding claims, wherein the compound having at least two carbon-carbon double bonds, the weight-average molecular weight of which per carbon-carbon double bond (WPU) is greater than 230 g/mol and the viscosity of which is greater than 2500 mPa·s (measured in accordance with DIN 53019 at 25°C), is a compound based on urethane (meth)acrylate, based on epoxy (meth)acrylate, a methacrylate of an alkoxylated bisphenol or based on other unsaturated compounds.

5. Reactive resin component according to any one of the preceding claims, wherein the compound having at least two carbon-carbon double bonds, the weight-average molecular weight of which per carbon-carbon double bond (WPU) is greater than 225 g/mol and the viscosity of which is less than 2500 mPa·s (measured in accordance with DIN 53019 at 25°C) is selected from the group consisting of tricyclodecane dimethanol diacrylate, ethoxylated bisphenol A dimethacrylates and ethoxylated glycol dimethacrylate.

6. Reactive resin component according to any one of the preceding claims, further containing at least one accelerator and at least one inhibitor.

7. Reactive resin component according to any one of the preceding claims, further containing a hydraulically setting or polycondensable compound.

8. Reactive resin component according to any one of the preceding claims, further containing other inorganic and/or organic aggregates.

9. Multi-component reactive resin system comprising a reactive resin component (A) according to any one of claims 1 to 8 and a hardener component (B) which contains a curing agent for the radically curable unsaturated compound.

10. Use of a combination of (a) a filler of oxides of silicon, which filler is modified with a silane that has reactive groups capable of participating in polymerization with the radically curable unsaturated compound, and optionally other inorganic additives, wherein the proportion of the at least one filler made of oxides of silicon, which filler is modified with a silane that has reactive groups capable of participating in the polymerization with the radically curable unsaturated compound and which has a grain diameter of 4 µm or smaller, is 0.5 to 60 wt.%, based on a reactive resin component, and (b) at least one compound having at least two carbon-carbon double bonds, the weight-average molecular weight of which per carbon-carbon double bond (WPU) is greater than 225 g/mol and the viscosity of which is less than 2500 mPa·s (measured in accordance with DIN 53019 at 25°C), in a reactive resin component according to any one of claims 1 to 8,
and/or a reactive resin system according to claim 9 for chemical fastening to increase the performance of the reactive resin component and/or the reactive resin system.

11. Use according to claim 10, wherein the at least one compound having at least two carbon-carbon double bonds is selected from the group consisting of tricyclodecane dimethanol diacrylate, ethoxylated bisphenol A dimethacrylates and ethoxylated glycol dimethacrylate.

12. Use according to either claim 10 or claim 11, wherein the filler is selected from the group consisting of silicon dioxide in the additional presence of one or more oxides selected from oxides from the group of metals consisting in particular of calcium, titanium, iron, sodium or the like, the filler in particular being selected from the group consisting of quartz or silicates.

## Revendications

1. Composant de résine réactive comportant au moins un composé insaturé durcissable par voie radicalaire et au moins une charge d'oxydes de silicium, qui est modifiée avec un silane, qui présente des groupes réactifs aptes à participer à la polymérisation avec le composé insaturé durcissable par voie radicalaire, et comportant éventuellement d'autres additifs inorganiques, dans lequel la proportion de toutes les matières solides inorganiques dans le composant de résine réactive est d'au moins 60 % en poids et que la proportion de l'au moins une charge constituée d'oxydes de silicium, qui est modifiée avec un silane qui présente des groupes réactifs aptes à participer à la polymérisation avec le composé insaturé durcissable par voie radicalaire, qui présente un diamètre de grain de 4 µm ou moins, est de 0,5 à 60 % en poids, par rapport au composant de résine réactive, **caractérisée en ce que**
le composé insaturé durcissable par voie radicalaire comprend
(i) 35 % en poids ou plus, par rapport au composant de résine réactive, d'un composé comportant au moins deux doubles liaisons carbone-carbone, dont le poids moléculaire moyen en poids par double liaison carbone-carbone (WPU) est supérieur à 230 g/mole et dont la viscosité est supérieure à 2500 mPa·s (mesurée selon DIN 53019 à 25 °C), ou
(ii) 30 % en poids ou plus, par rapport au composant de résine réactive, d'un composé comportant au moins deux doubles liaisons carbone-carbone, dont le poids moléculaire moyen en poids par double liaison carbone-carbone (WPU) est supérieur à 230 g/mole et dont la viscosité est supérieure à 2500 mPa·s (mesurée selon DIN 53019 à 25 °C), et
10 % en poids ou plus, par rapport au composant de résine réactive, d'un composé comportant au moins deux doubles liaisons carbone-carbone, dont le poids moléculaire moyen en poids par double liaison carbone-carbone (WPU) est supérieur à 125 g/mole et dont la viscosité est inférieure à 2500 mPa·s (mesurée selon DIN 53019 à 25 °C) ; ou
(iii) 57 % en poids ou plus, par rapport au composant de résine réactive, d'un composé comportant au moins deux doubles liaisons carbone-carbone, dont le poids moléculaire moyen en poids par double liaison carbone-carbone (WPU) est supérieur à 225 g/mole et dont la viscosité est inférieure à 2500 mPa·s (mesurée selon DIN 53019 à 25 °C) ; ou
(iv) 50 % en poids ou plus, par rapport au composant de résine réactive, d'un composé comportant au moins deux doubles liaisons carbone-carbone, dont le poids moléculaire moyen en poids par double liaison carbone-carbone (WPU) est supérieur à 225 g/mole et dont la viscosité est inférieure à 2500 mPa·s (mesurée selon DIN 53019 à 25 °C), et
10 % en poids ou plus, par rapport au composant de résine réactive, d'un composé comportant au moins deux doubles liaisons carbone-carbone, dont le poids moléculaire moyen en poids par double liaison carbone-carbone (WPU) est supérieur à 125 g/mole et dont la viscosité est inférieure à 2500 mPa·s (mesurée selon DIN 53019 à 25 °C).

2. Composant de résine réactive selon la revendication 1, dans lequel la charge est choisie dans le groupe constitué d'oxyde de silicium en présence supplémentaire d'un ou plusieurs oxydes choisis parmi les oxydes du groupe de métaux constitué en particulier de calcium, de titane, de fer, de sodium ou similaires, en particulier le quartz ou les silicates.

3. Composant de résine réactive selon la revendication 1 ou 2, dans lequel le silane est choisi dans le groupe constitué de 3-(méth)acryloyloxypropyltriméthoxysilane, de 3-(méth)acryloyloxypropyltriéthoxysilane, de 3-(méth)acryloyloxyméthyltriméthoxysilane, de 3-(méth)acryloyloxyméthyltriéthoxysilane, de vinyltriméthoxysilane, de vinyltriéthoxysilane, de tétraéthoxysilane, de tétraméthoxysilane et de tétrapropoxysilane.

4. Composant de résine réactive selon l'une des revendications précédentes, le composé comportant au moins deux doubles liaisons carbone-carbone, dont le poids moléculaire moyen en poids par double liaison carbone-carbone (WPU) est supérieur à 230 g/mol et dont la viscosité est supérieure à 2500 mPa·s (mesurée selon DIN 53019 à 25 °C), étant un composé à base de (méth)acrylate d'uréthane, à base de (méth)acrylate d'époxy, un méthacrylate d'un bisphénol alcoxylé ou à base d'autres composés insaturés.

5. Composant de résine réactive selon l'une des revendications précédentes, le composé comportant au moins deux doubles liaisons carbone-carbone, dont le poids moléculaire moyen en poids par double liaison carbone-carbone (WPU) est supérieur à 225 g/mol et dont la viscosité est inférieure à 2500 mPa·s (mesurée selon DIN 53019 à 25 °C), étant choisi dans le groupe constitué de diacrylate de tricyclodécanediméthanol, de diméthacrylates de bisphénol A éthoxylés et de diméthacrylate de glycol éthoxylé.

6. Composant de résine réactive selon l'une des revendications précédentes, contenant en outre au moins un accélérateur et au moins un inhibiteur.

7. Composant de résine réactive selon l'une des revendications précédentes, contenant en outre un composé à prise hydraulique ou polycondensable.

8. Composant de résine réactive selon l'une des revendications précédentes, contenant en outre d'autres additifs inorganiques et/ou organiques.

9. Système de résine réactive à plusieurs composants comportant un composant de résine réactive (A) selon l'une des revendications 1 à 8 et un composant durcisseur (B), qui contient un agent de durcissement pour le composé insaturé durcissable par voie radicalaire.

10. Utilisation d'une combinaison de (a) une charge d'oxydes de silicium modifiée avec un silane ayant des groupes réactifs aptes à participer à la polymérisation avec le composé insaturé durcissable par voie radicalaire, et comportant éventuellement d'autres additifs inorganiques, dans laquelle la proportion de l'au moins une charge d'oxydes de silicium modifiée par un silane ayant des groupes réactifs aptes à participer à la polymérisation avec le composé insaturé durcissable par voie radicalaire, qui a un diamètre de grain de 4 µm ou moins, est de 0,5 à 60 % en poids, par rapport à un composant de résine réactive, et (b) au moins un composé comportant au moins deux doubles liaisons carbone-carbone, dont le poids moléculaire moyen en poids par double liaison carbone-carbone (WPU) est supérieur à 225 g/mole et dont la viscosité est inférieure à 2500 mPa·s (mesurée selon DIN 53019 à 25 °C), dans un composant de résine réactive selon l'une des revendications 1 à 8,
et/ou un système de résine réactive selon la revendication 9 pour la fixation chimique permettant l'augmentation de la performance du composant de résine réactive et/ou du système de résine réactive.

11. Utilisation selon la revendication 10, dans laquelle l'au moins un composé comportant au moins deux doubles liaisons carbone-carbone est choisi dans le groupe constitué de diacrylate de tricyclodécanediméthanol, de diméthacrylates de bisphénol A éthoxylés et de diméthacrylate de glycol éthoxylé.

12. Utilisation selon la revendication 10 ou 11, dans laquelle la charge est choisie dans le groupe constitué d'oxyde de silicium en présence supplémentaire d'un ou plusieurs oxydes choisis parmi les oxydes du groupe de métaux constitué en particulier de calcium, de titane, de fer, de sodium ou similaires, en particulier le quartz ou les silicates.
